# EUROPEAN PATENT APPLICATION

(11) **EP 4 804 716 A1**
(43) Date of publication of application: **09.09.2026**
(21) Application number: 24885675.9
(22) Date of filing: 28.10.2024
(51) Int. Cl.: H04W 76/15, H04W 24/08, H04W 76/19

(54) **COMMUNICATION SYSTEM**

(30) Priority: 01.11.2023 JP 2023187743
(71) Applicant: Mitsubishi Electric Corporation, Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Mewburn Ellis LLP
(86) International application number: PCT/JP2024/038395
(87) International publication number: WO 2025/094903

(57) **Abstract**

A communication system includes a plurality of networks including a radio access network and a core network, the plurality of networks including an anchor network being one of the plurality of networks which has a user plane function of being directly connected to a data network of a data transmission and reception destination of a communication terminal, and a non-anchor network connected to the data network via the anchor network, the anchor network being configured to acquire information related to communication quality in the non-anchor network from the non-anchor network, perform failure detection of the non-anchor network, based on the information acquired, and perform failure detection of the anchor network.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

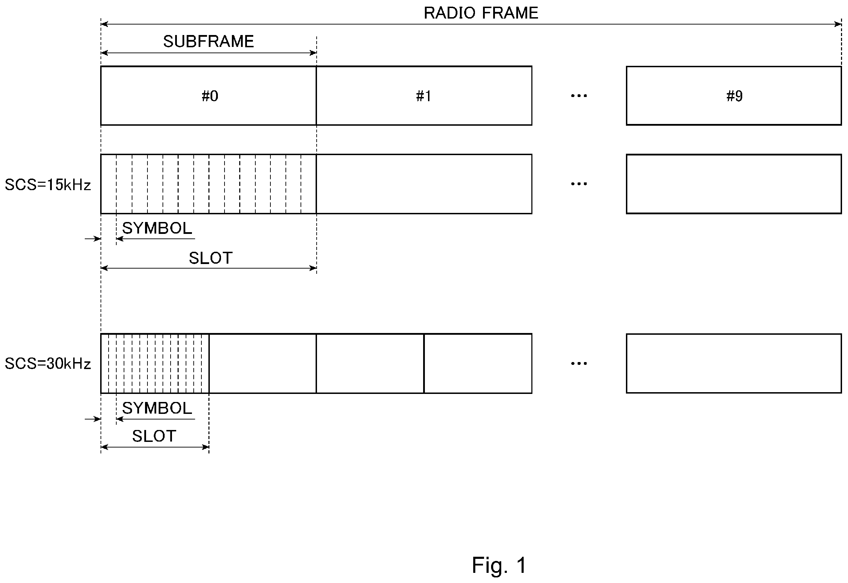

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximitybased service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are proposed for mobile communication systems. For example, in order to enhance communication capacity and reliability, a technology is proposed that one terminal connects to a plurality of NWs simultaneously and that causes communication capacity and reliability to be enhanced (see NPLs 30 and 31).

### Citation List

### Non Patent Literature

[NPL 1] 3GPP TS 36.300 V17.5.0
[NPL 2] 3GPP TS 38.300 V17.6.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V18.3.0
[NPL 11] 3GPP TS 38.211 V18.0.0
[NPL 12] 3GPP TS 38.212 V18.0.0
[NPL 13] 3GPP TS 38.213 V18.0.0
[NPL 14] 3GPP TS 38.214 V18.0.0
[NPL 15] 3GPP TS 38.321 V17.6.0
[NPL 16] 3GPP TS 38.322 V17.3.0
[NPL 17] 3GPP TS 38.323 V17.5.0
[NPL 18] 3GPP TS 37.324 V17.0.0
[NPL 19] 3GPP TS 38.331 V17.6.0
[NPL 20] 3GPP TS 38.401 V17.6.0
[NPL 21] 3GPP TS 38.413 V17.6.0
[NPL 22] 3GPP TS 37.340 V17.6.0
[NPL 23] 3GPP TS 38.423 V17.6.0
[NPL 24] 3GPP TS 38.305 V17.6.0
[NPL 25] 3GPP TS 23.273 V18.3.0
[NPL 26] 3GPP TR 23.703 V12.0.0
[NPL 27] 3GPP TS 23.287 V18.1.0
[NPL 28] 3GPP TS 23.303 V17.1.0
[NPL 29] 3GPP TS 38.340 V17.5.0
[NPL 30] 3GPP SWS-230049
[NPL 31] 3GPP TS 23.502 V18.3.0
[NPL 32] 3GPP TS 23.503 V18.3.0
[NPL 33] 3GPP TS 32.851 V12.2.0
[NPL 34] 3GPP TS 28.537 V17.3.0

### SUMMARY

### Technical Problem

A failure occurs in a plurality of NWs to which a UE is simultaneously connected, in some cases. However, processing related to detection of an NW failure in a communication system in a state where a UE is simultaneously connected to a plurality of NWs has not been disclosed. For this reason, in a state where the UE is simultaneously connected to the plurality of NWs, the NW failure cannot be detected, and countermeasures against the NW failure cannot be taken. This consequently leads to problems that reliability cannot be secured in such a communication system using a plurality of NWs and availability of communication NWs is reduced, for example.

In view of the above problem, an object of the present disclosure is to enable, in a communication system having a configuration that a UE can simultaneously connect to a plurality of networks, detection of a failure of a network while the UE is simultaneously connected to the plurality of networks.

### Solution to Problem

A communication system according to the present disclosure is a communication system supporting a fifth generation radio access system, the communication system including a plurality of networks including a radio access network and a core network, in which the plurality of networks include an anchor network being one of the plurality of networks to which a communication terminal is connected and has a user plane function of being directly connected to a data network of a data transmission and reception destination of the communication terminal, and a non-anchor network connected to the data network via the anchor network, and the anchor network is configured to acquire information related to communication quality in the non-anchor network from the non-anchor network, perform failure detection of the non-anchor network, based on the information acquired, and perform failure detection of the anchor network based on information related to communication quality in the anchor network.

### Advantageous Effects of Invention

According to the present disclosure, a communication system capable of detecting a failure of a network while a UE is simultaneously connected to a plurality of networks is obtained.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a configuration diagram illustrating an example of connection of a plurality of NWs according to embodiment 1;
Fig. 12 is a sequence diagram illustrating an example of QoS monitoring configuration operation according to embodiment 1;
Fig. 13 is a sequence diagram illustrating an example of a procedure 1100 in Fig. 12;
Fig. 14 is a sequence diagram illustrating an example of a procedure 1111 in Fig. 12;
Fig. 15 is a sequence diagram illustrating an example of a procedure 1150 in Fig. 12;
Fig. 16 is a sequence diagram illustrating an example of a procedure 1161 in Fig. 12;
Fig. 17 is a sequence diagram illustrating an example of operation of NW failure detection according to embodiment 1;
Fig. 18 is a sequence diagram illustrating another example of the QoS monitoring configuration operation according to embodiment 1;
Fig. 19 is a sequence diagram illustrating another example of the operation of NW failure detection according to embodiment 1;
Fig. 20 is a diagram of a first part of a sequence illustrating the other example of the QoS monitoring configuration operation according to embodiment 1;
Fig. 21 is a diagram of a middle part of the sequence illustrating the other example of the QoS monitoring configuration operation according to embodiment 1;
Fig. 22 is a diagram of an end part of the sequence illustrating the other example of the QoS monitoring configuration operation according to embodiment 1;
Fig. 23 is a sequence diagram illustrating an example of intermediate UPF switching operation in a non-anchor NW according to embodiment 2;
Fig. 24 is a sequence diagram illustrating an example of a procedure 1625 in Fig. 23;
Fig. 25 is a sequence diagram illustrating another example of the intermediate UPF switching operation in a non-anchor NW according to embodiment 2;
Fig. 26 is a sequence diagram illustrating an example of an NW switching operation in a non-anchor NW according to embodiment 3;
Fig. 27 is a sequence diagram illustrating another example of the NW switching operation in a non-anchor NW according to embodiment 3;
Fig. 28 is a sequence diagram illustrating another example of the NW switching operation in an anchor NW according to alteration 1 of embodiment 3;
Fig. 29 is a diagram of the first half of a sequence illustrating an example of anchor UPF switching operation according to embodiment 4; and
Fig. 30 is a diagram of the second half of the sequence illustrating the example of the anchor UPF switching operation according to embodiment 4.

### DETAILED DESCRIPTION

### First Embodiment

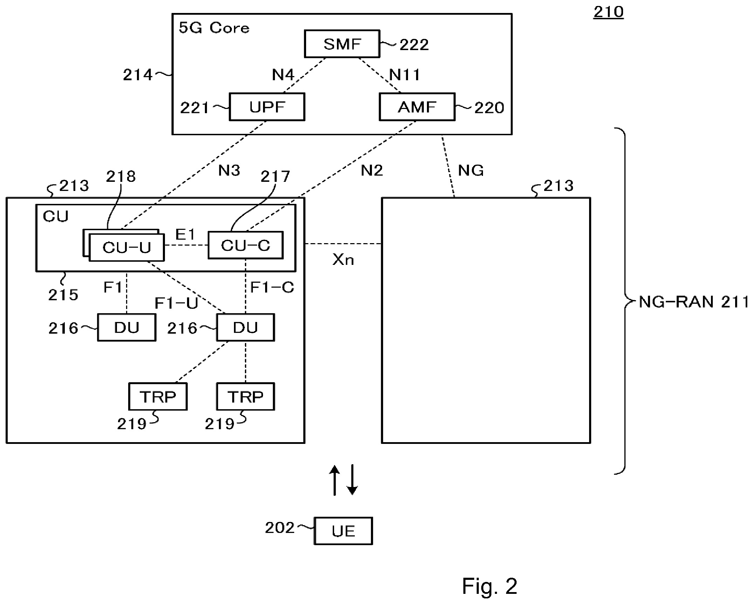

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

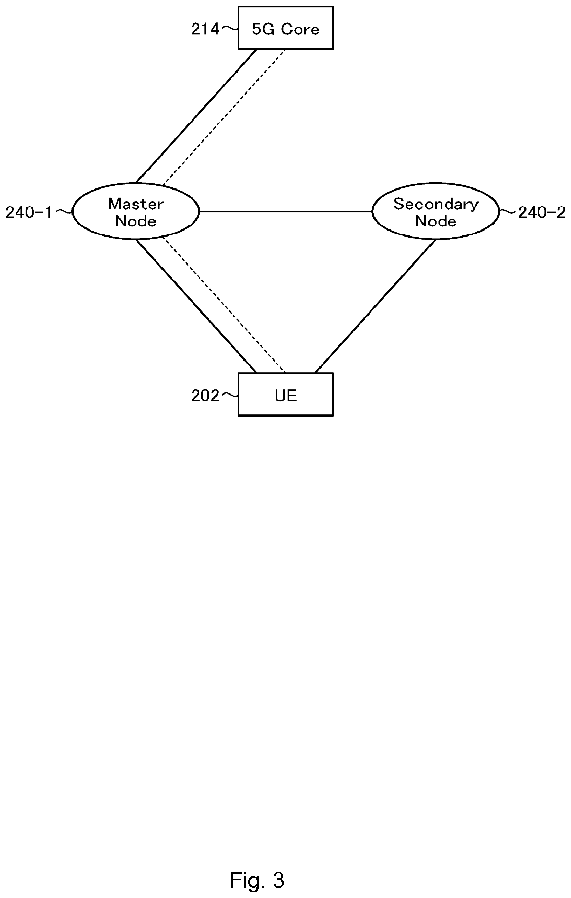

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

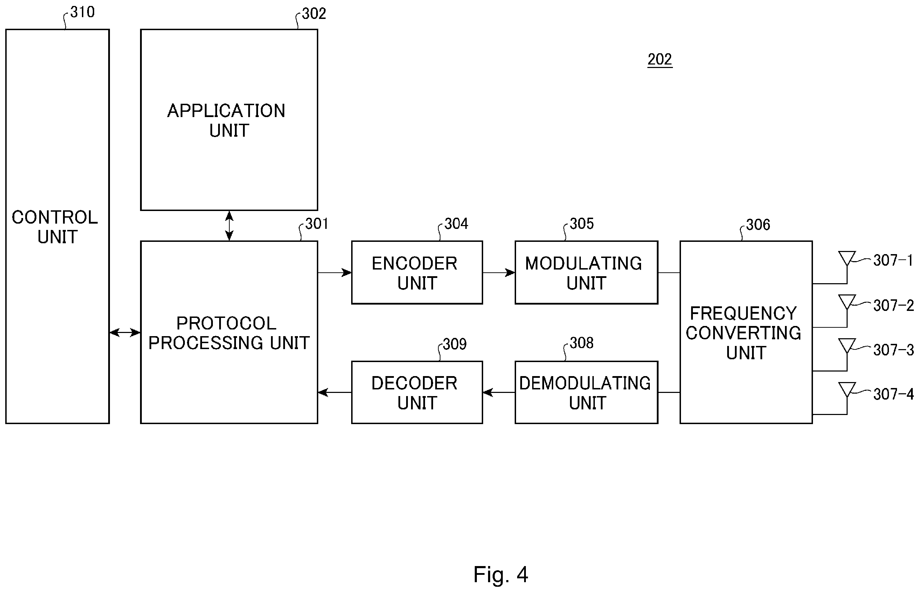

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

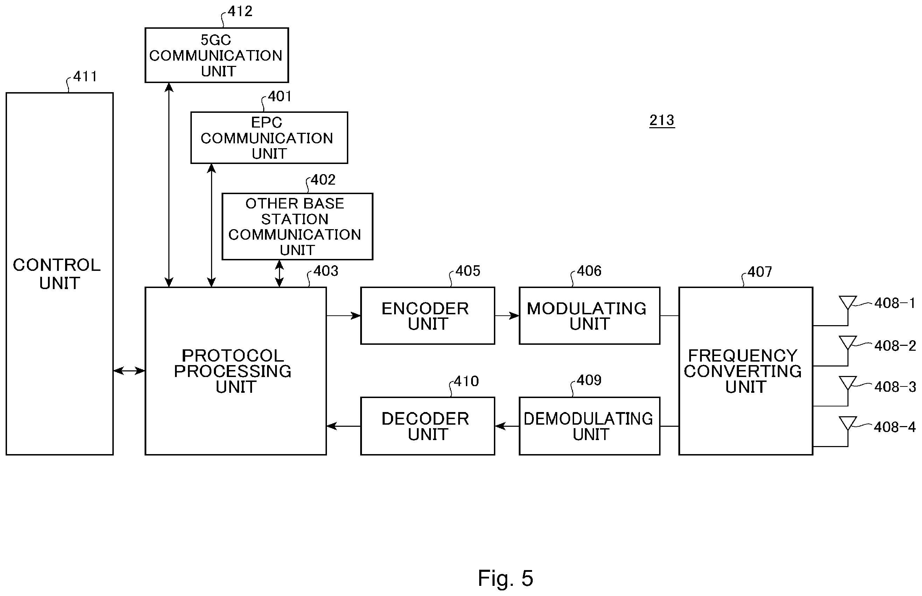

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

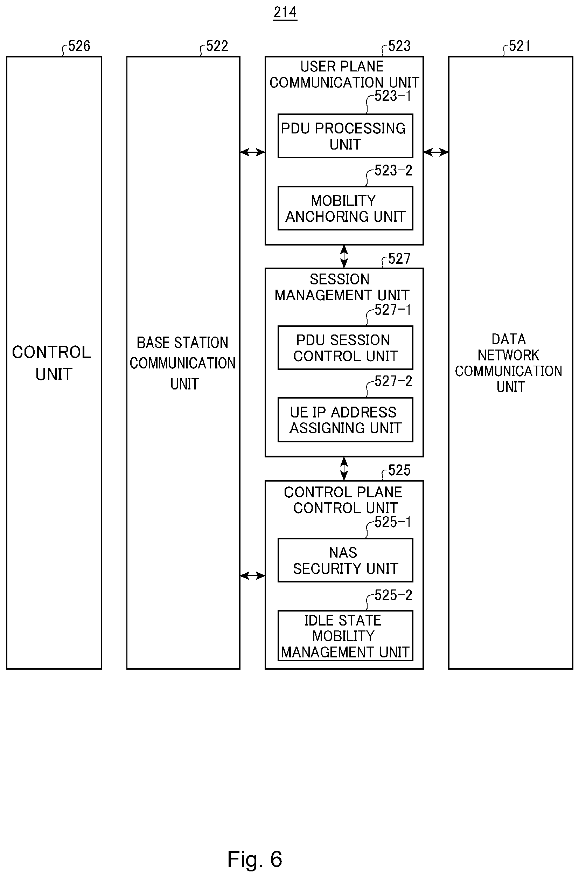

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

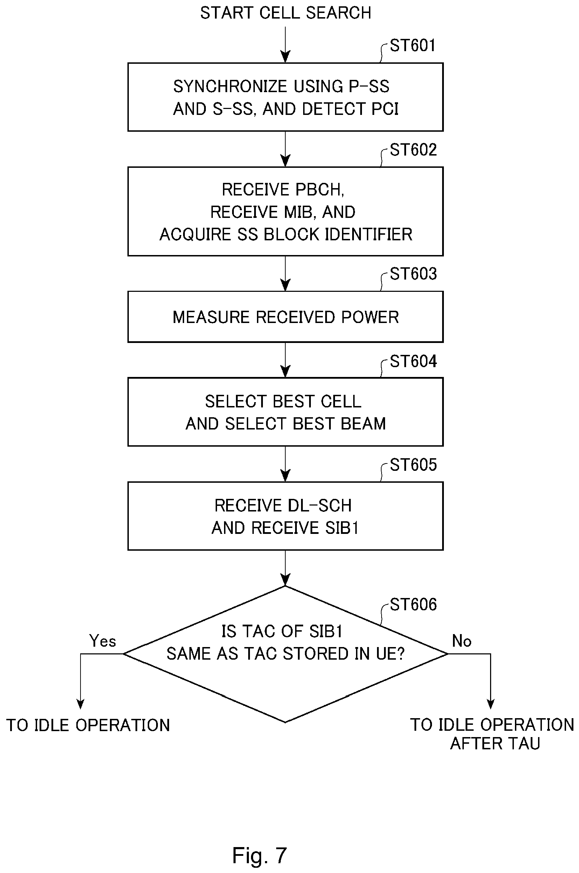

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network apparatus") updates the tracking area list, based on an identification number (a UE-ID or the like) of the communication terminal transmitted from the communication terminal together with a TAU request signal. The core network apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

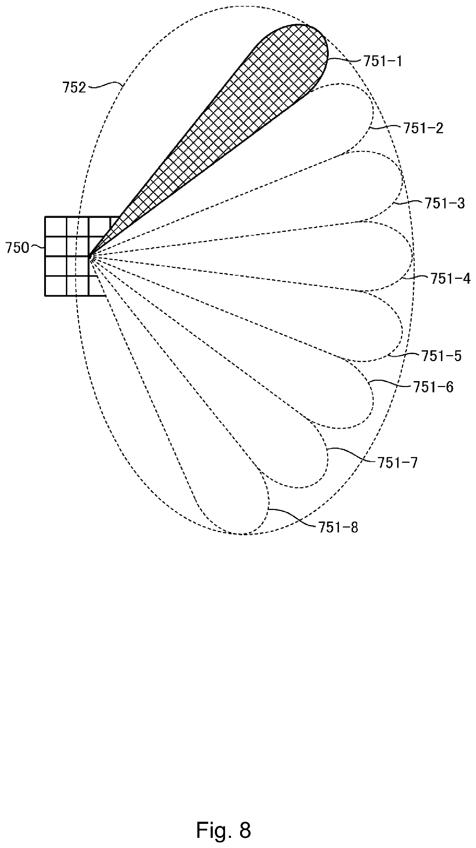

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

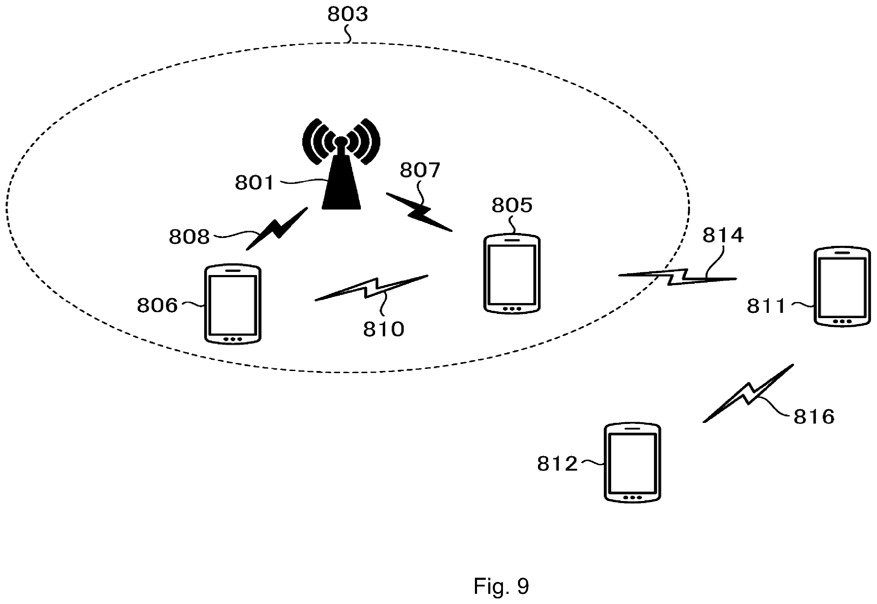

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

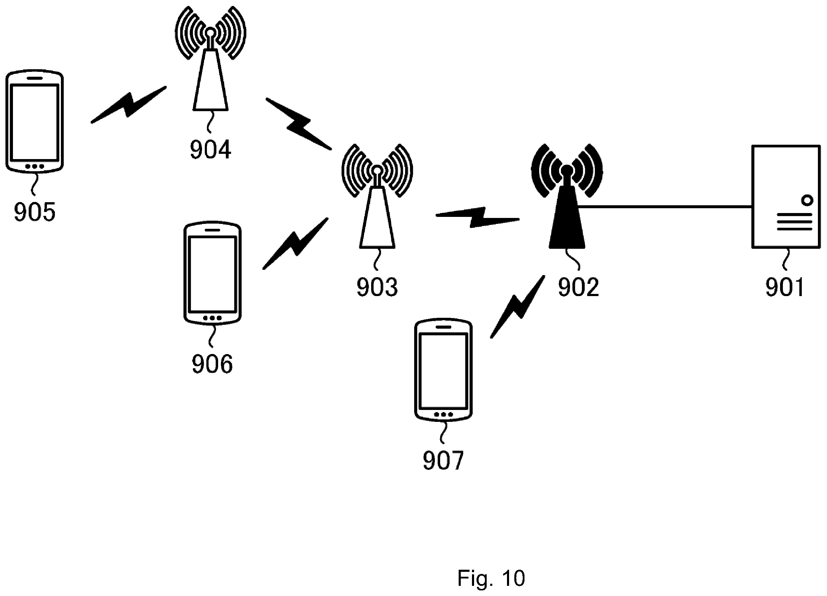

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In a mobile communication system in 3GPP, a UE may connect to a plurality of NWs. Connection between the UE and a data network (DN) may be made via an anchor UPF (a UPF that directly connects to the DN). An anchor NW (a network with the anchor UPF, this similarly applies below) may connect to one or plurality of the NWs connected to the UE. Note that, in the Specification, an NW without an anchor UPF is referred to as a non-anchor NW. An apparatus constituting an anchor NW is referred to as an anchor NW apparatus, and an apparatus constituting a non-anchor NW is referred to as a non-anchor NW apparatus.

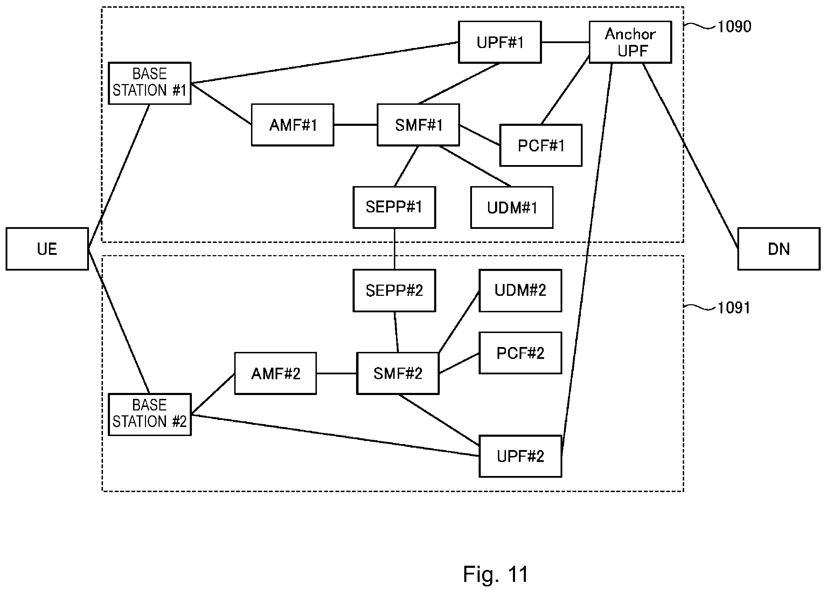

Fig. 11 is a configuration diagram illustrating an example in which a UE is connected to a plurality of NWs. In the example illustrated in Fig. 11, the UE is connected to each of an NW 1090 and an NW 1091. In the example illustrated in Fig. 11, all of base station #1, AMF #1, UPF #1, SMF #1, Security Edge Protection Proxy (SEPP, see NPL 10) #1, PCF #1, UDM #1, and an anchor UPF belong to the NW 1090, and all of base station #2, AMF #2, UPF #2, SMF #2, SEPP #2, PCF #2, and UDM #2 belong to the NW 1091. The anchor UPF is connected to a DN.

A failure occurs in a plurality of NWs to which a UE is simultaneously connected, in some cases. However, processing related to detection of an NW failure in a communication system in a state where a UE is simultaneously connected to a plurality of NWs has not been disclosed. For this reason, in a state where the UE is simultaneously connected to the plurality of NWs, the NW failure cannot be detected, and countermeasures against the NW failure cannot be taken. This consequently leads to a problem that reliability cannot be secured in such a communication system using a plurality of NWs, for example.

The present embodiment discloses a method of solving such issues described above.

In the present embodiment, an anchor NW detects an NW failure. The detection may be performed by a network function (NF) in the anchor NW or may be performed by an anchor NW apparatus. For example, the detection may be performed by an SMF of the anchor NW (which may be hereinafter referred to as an anchor SMF). Accordingly, for example, the same apparatus can perform NW failure detection and session management, and this consequently enables reduction of the time until NW failure detection and reduction of signaling.

For detection of an NW failure, a quality of service (QoS) monitoring report (see NPLs 10 and 31) may be used, or a result of quality of experience (QoE) measurement (see NPL 2) may be used. For example, the anchor NW may detect a failure of an NW by using information related to QoS, for example, a QoS monitoring report, or may detect a failure of an NW by using information related to QoE, for example, a result of QoE measurement. The anchor NW may detect a failure of an NW by using both the information related to QoS and the information related to QoE. The information related to QoS and the information related to QoE are each information related to communication quality. The result of QoE measurement may be, for example, a measurement result in a UE. The UE may notify a base station of the measurement result. The base station may notify an operation, administration and maintenance (OAM) (see NPL 33) function unit of the measurement result, may notify a management service (MnS) (see NPL 34) function unit of the measurement result, or may notify an NF (for example, an SMF) of the measurement result. Such notification from the base station to the NF (for example, the SMF) may be performed via an AMF or may be performed directly.

The NF (for example, the SMF) may acquire a QoE measurement result from the base station, from the OAM, from the MnS, or from a network data analytics function (NWDAF) (see NPL 10).

The anchor NW apparatus may request QoS monitoring from the non-anchor NW apparatus. For example, the anchor SMF may request QoS monitoring from the non-anchor NW apparatus. The anchor SMF may make the request to the SMF of the non-anchor NW (which may be hereinafter referred to as a non-anchor SMF). The request from the anchor SMF to the non-anchor NW apparatus (for example, the non-anchor SMF) may be performed via the SEPPs, for example. Signaling transmission and reception between the anchor SMF and the non-anchor SMF may be performed via the SEPPs.

The QoS monitoring request may be performed by an application function (AF). The AF may make a QoS monitoring request to the non-anchor NW via the anchor NW or may make the request directly to the non-anchor NW. The request from the AF may be made to the PCF of the anchor NW and/or the non-anchor NW, may be made to a network exposure function (NEF) (see NPL 10), or may be made to the PCF via the NEF.

The QoS monitoring request from the anchor SMF to the non-anchor NW apparatus may be performed at the time of PDU session establishment or may be performed at the time of PDU session modification. For example, information related to the request may be included in signaling of a PDU session establishment request or may be included in signaling of a PDU session modification request. For example, Nsmf_PDUSession_Establish_Request (see NPL 31) may be used for the signaling of the PDU session establishment request. For example, Nsmf_PDUSession_Modification_Request (see NPL 31) may be used for the signaling of the PDU session modification request.

The non-anchor SMF may request QoS monitoring from a UPF. The request from the non-anchor SMF to the UPF may be performed, for example, in response to a QoS monitoring request from the anchor SMF to the non-anchor SMF or may be performed spontaneously by the non-anchor SMF, for example. The UPF may be an intermediate UPF (UPF not being an anchor UPF), for example. The intermediate UPF may be an intermediate UPF belonging to the non-anchor NW (for example, UPF #2 illustrated in Fig. 11). The UPF may perform QoS monitoring in response to the request.

The non-anchor SMF may request QoS monitoring from a base station. The base station may be, for example, a base station belonging to the same NW as the non-anchor SMF. The request from the non-anchor SMF to the base station may be performed via the AMF belonging to the same NW as the non-anchor SMF (which may be hereinafter referred to as a non-anchor AMF), for example. The request from the non-anchor SMF to the base station may be performed, for example, in response to a QoS monitoring request from the anchor SMF to the non-anchor SMF or may be performed spontaneously by the non-anchor SMF. The base station may perform QoS monitoring in response to the request.

The anchor NW may determine information related to QoS monitoring in each NW, for example, a QoS monitoring policy. Each NW may include an anchor NW or may include a non-anchor NW. For example, the PCF of the anchor NW (which may be hereinafter referred to as an anchor PCF) may determine the information. As another example, the AF may determine information related to QoS monitoring. The AF may notify the anchor PCF of the information. The anchor SMF may acquire the information from the anchor PCF. The anchor SMF may determine a QoS monitoring configuration by using the QoS monitoring policy. For example, the anchor SMF may determine which apparatus performs QoS monitoring.

The QoS monitoring policy may include, for example, information disclosed in clause 6.1.3.21 of NPL 32 (3GPP TS23.503). For example, the QoS monitoring policy may include information related to a QoS parameter, may include information related to reporting periodicity, or may include information related to a condition that triggers reporting (for example, a threshold, minimum waiting time until subsequent reporting).

As another example of the determination of the information related to QoS monitoring in each NW, the non-anchor NW may determine information related to QoS monitoring, for example, the QoS monitoring policy, in the non-anchor NW. For example, the PCF of the non-anchor NW (which may be hereinafter referred to as a non-anchor PCF) may determine the information. As another example, the AF may determine information related to QoS monitoring in the non-anchor NW. The AF may notify the non-anchor PCF of the information. The non-anchor SMF may acquire the information from the non-anchor PCF. The AF may be present in the DN, may be present in the anchor NW, or may be present in the non-anchor NW.

The anchor NW may determine which NW determines a configuration of QoS monitoring in each NW. For example, the anchor NW may determine which NW determines a configuration of QoS monitoring in the non-anchor NW. The anchor SMF may include information indicating which NW performs QoS monitoring configuration, in a QoS monitoring request to the non-anchor SMF, for notification. The non-anchor SMF may use the information to grasp which NW performs the QoS monitoring configuration. For example, the non-anchor SMF may notify the non-anchor PCF of the QoS monitoring configuration determined by the anchor NW in response to reception of information indicating that the anchor NW performs the QoS monitoring configuration, or may request configuration of QoS monitoring from the non-anchor PCF in response to reception of information indicating that the non-anchor NW performs QoS the monitoring configuration. This can, for example, prevent a conflict between the QoS monitoring configuration determined in the anchor NW and the QoS monitoring configuration determined in the non-anchor NW, and as a result, prevent a malfunction related to QoS monitoring.

As another example, which NW performs the QoS monitoring configuration may be judged based on whether or not a QoS monitoring configuration is included in a QoS monitoring request from the anchor SMF to the non-anchor SMF. For example, the anchor NW may determine, when a QoS monitoring configuration is included in the request, the QoS monitoring configuration, or the non-anchor NW may determine, when no QoS monitoring configuration is included in the request, a QoS monitoring configuration. The non-anchor SMF may grasp, when a QoS monitoring configuration is included in the request, that the QoS monitoring configuration determined by the anchor NW is used, or may grasp, when no QoS monitoring configuration is included in the request, that the non-anchor NW performs QoS monitoring configuration. This enables, for example, reduction in size of QoS monitoring request signaling.

As another example related to the determination of a QoS monitoring a configuration in each NW, both NWs may each determine a QoS monitoring configuration. This enables, for example, complexity in the communication system to be prevented.

Which NW determines a QoS monitoring configuration to be prioritized may be defined in a standard. For example, a QoS monitoring configuration determined by the anchor NW may be prioritized over a QoS monitoring configuration determined by the non-anchor NW, or a QoS monitoring configuration determined by the non-anchor NW may be prioritized over a QoS monitoring configuration determined by the anchor NW.

(1) to (10) below are disclosed as examples of information included in a QoS monitoring configuration.

(1) Information related to a condition for initiating QoS monitoring reporting.
(2) Information related to the QoS type of a monitoring target.
(3) Information related to a UE.
(4) Information related to a PDU session.
(5) Information related to a QoS flow.
(6) Information related to a subject that performs QoS monitoring.
(7) Information related to a subject that performs NW failure detection.
(8) Information related to a QoS monitoring policy.
(9) Information related to uplink/downlink.
(10) Any combination of (1) to (9) described above.

(1) described above may include, for example, information indicating that reporting is performed periodically or may include information indicating that reporting is performed in response to a certain event.

(1) described above may include information related to periodicity of reporting. This can, for example, prevent unnecessary reporting to consequently reduce the amount of signaling in the communication system.

(1) described above may include information related to the event. The event may be that QoS becomes below a certain threshold, may be that QoS becomes equal to or below a certain threshold, may be that QoS exceeds a certain threshold, or may be that QoS reaches or exceeds a certain threshold. For example, (1) described above may include information related to a threshold of the event. (1) may include information related to periodicity for performing measurement of QoS. By the information related to the QoS measurement periodicity being included, it is possible to prevent excessive reporting of QoS monitoring results, for example.
(2) described above may be, for example, packet delay, congestion, a data rate, a variation amount of packet delay, or round-trip delay of a packet. The packet delay may be, for example, uplink packet delay or downlink packet delay. The variation amount of packet delay may be, for example, a dispersion amount of packet delay or a standard deviation of packet delay.
(3) described above may be, for example, information of a UE related to data being a QoS monitoring target. The information may be information of a UE that receives the data or may be information of a UE that transmits the data. (3) described above may include, for example, information for identifying a UE. This enables, for example, a UPF to quickly identify data traffic to be a QoS monitoring target.
(4) described above may be PDU session information related to data of a QoS monitoring target. (4) described above may include, for example, information for identifying a PDU session. Consequently, for example, effects similar to those described above can be exerted.
(5) described above may be, for example, information of a QoS flow related to data being a QoS monitoring target. (5) described above may include, for example, information for identifying a QoS flow. This can, for example, exert effects similar to those described above.
(6) described above may include, for example, information related to a UPF, a base station, and/or a UE that performs QoS monitoring. (6) described above may include, for example, information for identifying the UPF, information for identifying the base station, or information for identifying the UE. This enables, for example, the UPF, the base station, and/or the UE to promptly grasp that the apparatus itself performs QoS monitoring.

As examples of (7) described above, (7-1) to (7-3) below are disclosed.

(7-1) Information indicating that the anchor NW performs detection of an NW failure.

(7-2) Information indicating that the non-anchor NW performs detection of an NW failure.

(7-3) Information indicating that a failure of an NW itself is detected in the NW itself.

(7-1) described above may include information indicating which NF performs the detection. For example, (7-1) described above may include information indicating that the anchor SMF performs the detection, may include information indicating that the anchor AMF (AMF belonging to the same NW as the anchor SMF) performs the detection, or may include information indicating that the anchor UPF performs the detection. The non-anchor NW, for example, the non-anchor SMF may notify the anchor NW, for example, the anchor SMF, of a QoS monitoring report by using the information of (7-1) described above. The QoS monitoring report notified by the non-anchor NW apparatus may be, for example, a QoS monitoring report received from the UPF of the NW itself. This enables, for example, quick NW failure detection in the anchor NW.

(7-2) described above may include information indicating which NF performs the detection. For example, (7-2) described above may include information indicating that the non-anchor SMF performs the detection, may include information indicating that the non-anchor AMF performs the detection, or may include information indicating that the UPF of the non-anchor NW performs the detection. The anchor NW, for example, the anchor SMF may notify the non-anchor NW, for example, the non-anchor SMF, of a QoS monitoring report by using the information of (7-2) described above. The QoS monitoring report notified by the anchor NW apparatus may be, for example, a QoS monitoring report received from the UPF of the NW itself. This enables, for example, quick NW failure detection in the non-anchor NW.

(7-3) described above enables, for example, complexity in the communication system to be prevented.

(8) described above may include, for example, a QoS monitoring policy determined by the anchor PCF. The non-anchor SMF may notify the non-anchor PCF of the information of (8) described above. This can, for example, prevent inconsistency in QoS monitoring policies between the anchor NW and the non-anchor NW and consequently prevent malfunction related to QoS monitoring.

(9) described above may include, for example, information indicating whether the traffic of a QoS monitoring target is uplink or downlink. The non-anchor NW apparatus may perform QoS monitoring of uplink and/or downlink traffic by using the information. This enables, for example, efficiency related to QoS monitoring to be improved.

The non-anchor SMF may request QoS monitoring from the intermediate UPF. The request may include, for example, the information of any of (1) to (10) described above. The intermediate UPF may initiate QoS monitoring in response to the request.

The non-anchor SMF may request QoS monitoring from a non-anchor base station (base station of the non-anchor NW). The request may include, for example, the information of any of (1) to (10) described above. The non-anchor base station may initiate QoS monitoring in response to the request.

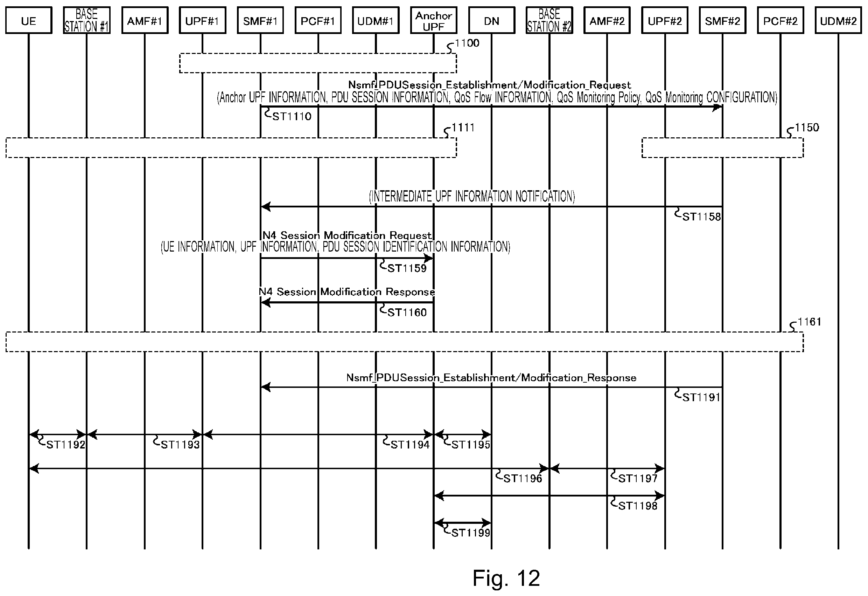

Fig. 12 is a sequence diagram illustrating an example of QoS monitoring configuration operation. Fig. 12 illustrates a sequence example of configuration operation in the communication system having the configuration illustrated in Fig. 11. Specifically, in the example illustrated in Fig. 12, base station #1, AMF #1, UPF #1, SMF #1, PCF #1, UDM #1, and an anchor UPF belong to the NW 1090, and base station #2, AMF #2, UPF #2, SMF #2, PCF #2, and UDM #2 belong to the NW 1091. The same applies to the drawings illustrating other sequence examples. In the example illustrated in Fig. 12, QoS monitoring is configured for UPF #1, the anchor UPF, and UPF #2. Fig. 12 illustrates a case where the anchor NW determines the configuration related to the QoS monitoring. In the example in Fig. 12, a case where QoS monitoring request is performed simultaneously with the PDU session establishment, but the QoS monitoring request may be performed simultaneously with PDU session modification, or PDU session modification for the QoS monitoring request may be performed. In the example illustrated in Fig. 12, a PDU session is established in each of both the NW 1090 and the NW 1091.

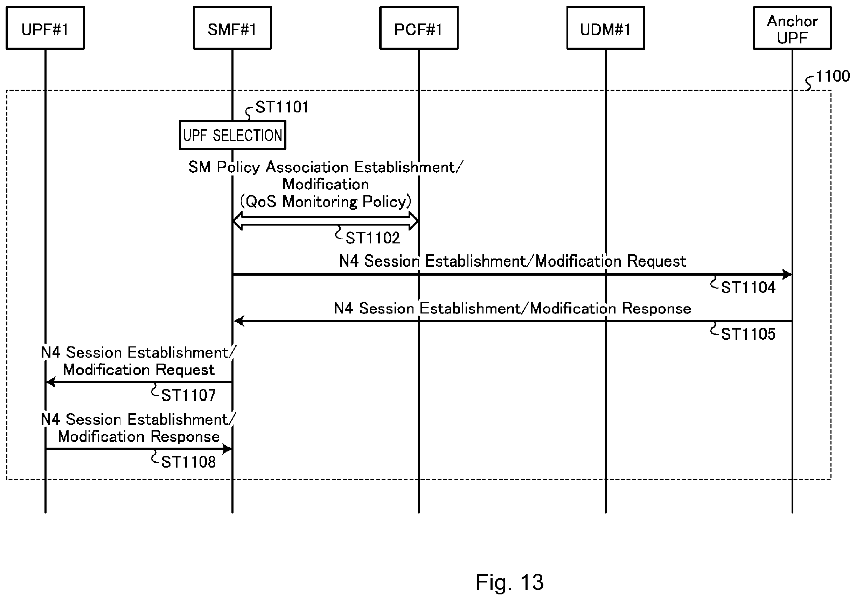

In a procedure 1100 illustrated in Fig. 12, connection establishment processing with the UPF in the NW 1090 is performed. The procedure 1100 will be described below. Fig. 13 is a sequence diagram illustrating an example of the procedure 1100 in Fig. 12.

In Step ST1101 illustrated in Fig. 13, SMF #1 selects a UPF. In the example illustrated in Fig. 13, SMF #1 selects UPF #1 and determines to use UPF #1.

In Step ST1102 illustrated in Fig. 13, a procedure of session management policy association establishment is performed between SMF #1 and PCF #1. The procedure may be, for example, a procedure disclosed in clause 4.16.4 of NPL 31 (3GPP TS23.502). In Step ST1102, SMF #1 may request a QoS monitoring policy from PCF #1. PCF #1 may notify SMF #1 of the QoS monitoring policy. In Step ST1102, a procedure of session management policy association modification may be performed. The procedure of session management policy association modification may be, for example, a procedure disclosed in clause 4.16.5 of NPL 31 (3GPP TS23.502). SMF #1 may determine a QoS monitoring configuration by using the QoS monitoring policy from PCF #1.

In Step ST1104 illustrated in Fig. 13, SMF #1 requests N4 session establishment from the anchor UPF. In response to Step ST1104, the anchor UPF performs the N4 session establishment. In Step ST1105, the anchor UPF performs response to Step ST1104 to SMF #1.

In Step ST1107 illustrated in Fig. 13, SMF #1 requests N4 session establishment from UPF #1. In response to Step ST1107, UPF #1 performs the N4 session establishment. In Step ST1108, UPF #1 performs response to Step ST1107 to SMF #1. In steps ST1107 and ST1108, N4 session modification request and response may be performed.

The description returns to Fig. 12. In Step ST1110 illustrated in Fig. 12, SMF #1 requests PDU session establishment from SMF #2. The request may be a request for PDU session modification. The request may include information related to a QoS monitoring policy or may include information related to a QoS monitoring configuration. The request may include the information of any of (1) to (10) described above, may include information related to an anchor UPF, may include information related to a PDU session, for example, information related to a PDU session to be established, or may include information related to a QoS flow, for example, information related to a QoS flow to be established. For Step ST1110, signaling of Nsmf_PDUSession_Establishment_Request (see NPL 31) may be used, or signaling of Nsmf_PDUSession_Modification_Request (see NPL 31) may be used. SMF #2 may initiate operation of the PDU session establishment or may initiate operation of the PDU session modification, in response to Step ST1110.

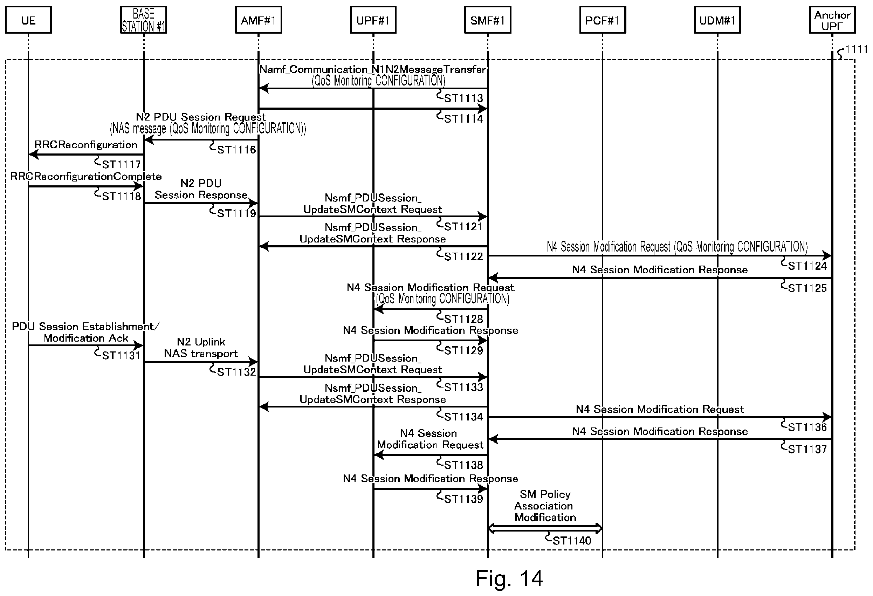

In a procedure 1111 illustrated in Fig. 12, PDU session establishment in the NW 1090 is performed. PDU session modification in the NW 1090 may be performed. The procedure 1111 will be described below. Fig. 14 is a sequence diagram illustrating an example of the procedure 1111 in Fig. 12.

In Step ST1113 and Step ST1114 illustrated in Fig. 14, transmission and reception of information necessary for PDU session establishment of the UE is performed between SMF #1 and AMF #1. Transmission and reception of information necessary for PDU session modification may be performed. In Step ST1113, SMF #1 may indicate AMF #1 to perform PDU session establishment or to perform PDU session modification. The indication may include the above-described information. The information may include information related to the UE, may include information related to a PDU session, may include information related to a QoS flow, may include information related to a UPF, or may include information related to a QoS monitoring configuration.

In Step ST1116 illustrated in Fig. 14, AMF #1 notifies base station #1 about PDU session establishment request to the UE. AMF #1 may notify base station #1 of the PDU session modification request. The notification may include a QoS monitoring configuration. In Step ST1117, base station #1 notifies the UE of the PDU session establishment request. Base station #1 may notify the UE of the PDU session modification request. For Step ST1117, RRC signaling, for example, signaling of RRC establishment may be used, or signaling of RRC reconfiguration may be used. The notification in Step ST1117 may include the QoS monitoring configuration. The UE may perform processing of PDU session establishment or processing of PDU session modification by using the content notified in Step ST1117.

In Step ST1118 illustrated in Fig. 14, the UE performs response to Step ST1117 to base station #1. The response may use RRC signaling, for example, signaling of RRC establishment completion or signaling of RRC reconfiguration completion. In Step ST1119, base station #1 performs response to Step ST1116 to AMF #1. The response in Step ST1119 may include N2 session management information.

In Step ST1121 illustrated in Fig. 14, AMF #1 notifies SMF #1 of the N2 session management information from base station #1. The notification may be performed by using, for example, the signaling of Nsmf_PDUSession_UpdateSMContext Request (see NPL 31). In Step ST1122, SMF #1 performs response to Step ST1121 to AMF #1. The response may use, for example, the signaling of Nsmf_PDUSession_UpdateSMContext Response (see NPL 31).

In Step ST1124 illustrated in Fig. 14, SMF #1 requests N4 session modification from the anchor UPF. The request may include, for example, a QoS monitoring configuration. The anchor UPF may initiate QoS monitoring by using the configuration. In Step ST1125, the anchor UPF performs response to Step ST1124 to SMF #1.

In Step ST1128 illustrated in Fig. 14, SMF #1 requests N4 session modification from UPF #1. The request may include, for example, a QoS monitoring configuration. UPF #1 may initiate QoS monitoring by using the configuration. In Step ST1129, UPF #1 performs response to Step ST1128 to SMF #1.

In Step ST1131 illustrated in Fig. 14, the UE notifies base station #1 of an acknowledgement of the PDU session establishment request. Notification of an acknowledgement to the PDU session modification request may be provided. The notification may be performed in response to completion of the PDU session establishment and/or modification. In Step ST1132, base station #1 notifies AMF #1 of information related to the acknowledgement. The notification in Step ST1132 may include the N2 session management information.

In Steps ST1133 and ST1134 illustrated in Fig. 14, processes similar to those performed in Steps ST1121 and ST1122, respectively, are performed.

In Steps ST1136 and ST1137 illustrated in Fig. 14, processes similar to those performed in Steps ST1124 and ST1125, respectively, are performed.

In Steps ST1138 and ST1139 illustrated in Fig. 14, processes similar to those performed in Steps ST1128 and ST1129, respectively, are performed.

In Step ST1140 illustrated in Fig. 14, a procedure of session management policy association modification is performed between SMF #1 and PCF #1. The procedure may be, for example, a procedure disclosed in clause 4.16.5 of NPL 31 (3GPP TS23.502).

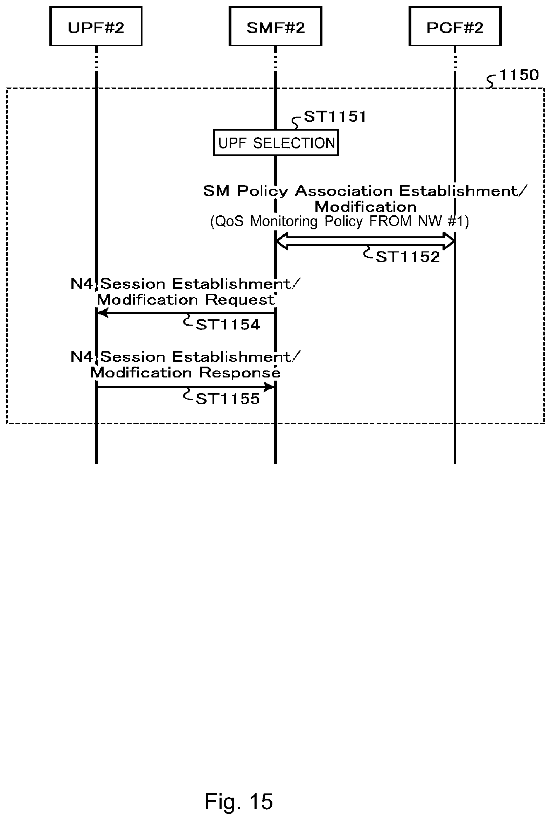

The description returns to Fig. 12. In a procedure 1150 illustrated in Fig. 12, connection establishment processing with the UPF in the NW 1091 is performed. The procedure 1150 will be described below. Fig. 15 is a sequence diagram illustrating an example of the procedure 1150 in Fig. 12.

In Step ST1151 illustrated in Fig. 15, SMF #2 selects a UPF. In the example illustrated in Fig. 15, SMF #2 selects UPF #2 and determines to use UPF #2. In Step ST1152, processing of session management policy association establishment is performed between SMF #2 and PCF #2. The procedure may be, for example, a procedure disclosed in clause 4.16.4 of NPL 31 (3GPP TS23.502). In Step ST1152, SMF #2 may notify PCF #2 of the QoS monitoring policy from SMF #1 that has received the notification in Step ST1110. In Step ST1152, a procedure of session management policy association modification may be performed. The procedure of session management policy association modification may be, for example, a procedure disclosed in clause 4.16.5 of NPL 31 (3GPP TS23.502).

In Steps ST1154 and ST1155 illustrated in Fig. 15, processes similar to those performed in Steps ST1107 and ST1108 of the procedure 1100 illustrated in Fig. 13, respectively, are performed between SMF #2 and UPF #2.

The description returns to Fig. 12. In Step ST1158 illustrated in Fig. 12, SMF #2 notifies SMF #1 of information related to an intermediate UPF. In the example illustrated in Fig. 12, SMF #2 may notify SMF #1 of information related to UPF #2.

In Steps ST1159 and ST1160 illustrated in Fig. 12, processes similar to those performed in Steps ST1124 and ST1125 of the procedure 1111 illustrated in Fig. 14, respectively, are performed. In Step ST1159, a request asking a connection to UPF #2 may be transmitted. The anchor UPF may perform connection to UPF #2 in response to Step ST1159.

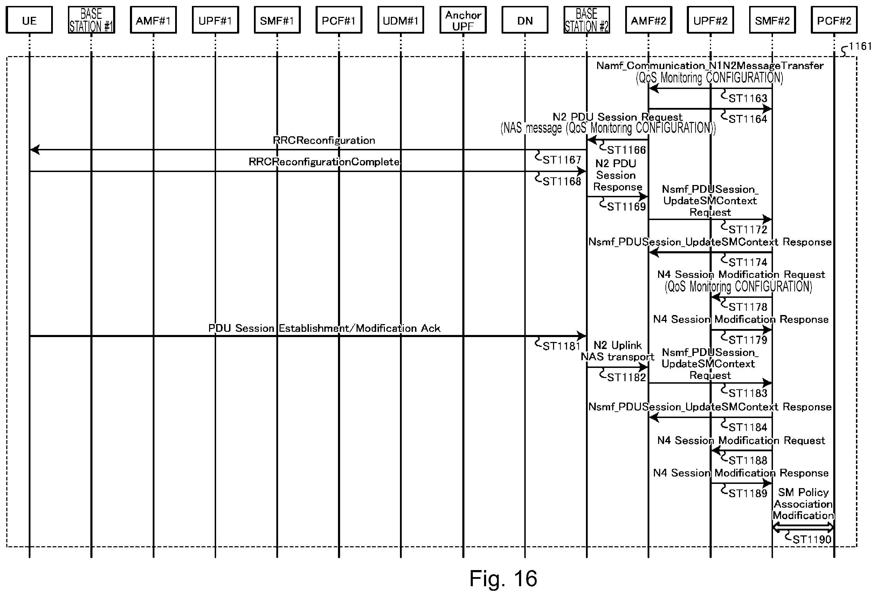

In a procedure 1161 illustrated in Fig. 12, PDU session establishment in the NW 1091 is performed. PDU session modification in the NW 1091 may be performed. The procedure 1161 will be described below. Fig. 16 is a sequence diagram illustrating an example of the procedure 1161 in Fig. 12.

In Steps ST1163 to ST1174 illustrated in Fig. 16, processes similar to those performed in Steps ST1113 to ST1122 of the procedure 1111 illustrated in Fig. 14, respectively, are performed in SMF #2, AMF #2, base station #2, and the UE.

In Steps ST1178 and ST1179 illustrated in Fig. 16, processes similar to those performed in Steps ST1128 and ST1129 of the procedure 1111 illustrated in Fig. 14, respectively, are performed between SMF #2 and UPF #2.

In Steps ST1181 to ST1184 illustrated in Fig. 16, processes similar to those performed in Steps ST1131 to ST1134 of the procedure 1111 illustrated in Fig. 14, respectively, are performed in the UE, base station #2, AMF #2, and SMF #2.

In Steps ST1188 to ST1190 illustrated in Fig. 16, processes similar to those performed in Steps ST1138 to ST1140 of the procedure 1111 illustrated in Fig. 14, respectively, are performed in UPF #2, SMF #2, and PCF #2.

The description returns to Fig. 12. In Step ST1191 illustrated in Fig. 12, SMF #2 performs response to the PDU session establishment request, to SMF #1. Response to the PDU session modification request may be performed. Step ST1191 may be performed as a response to Step ST1110.

Step ST1191 illustrated in Fig. 12 may be performed after Step ST1184 step of the procedure 1161 illustrated in Fig. 16. Step ST1191 may be performed before Step ST1188 of the procedure 1161 illustrated in Fig. 16. This enables, for example, SMF #2 to quickly respond to PDU session establishment/modification.

In Steps ST1192 to ST1195 illustrated in Fig. 12, data transmission and reception between the UE and the DN via the NW 1090 are performed. Step ST1192 indicates data transmission and reception between the UE and base station #1. Step ST1193 indicates data transmission and reception between base station #1 and UPF #1. Step ST1194 indicates data transmission and reception between UPF #1 and the anchor UPF. Step ST1195 indicates data transmission and reception between the anchor UPF and the DN.

In Steps ST1196 to ST1199 illustrated in Fig. 12, data transmission and reception between the UE and the DN via the NW 1091 are performed. Step ST1196 indicates data transmission and reception between the UE and base station #2. Step ST1197 indicates data transmission and reception between base station #2 and UPF #2. Step ST1198 indicates data transmission and reception between UPF #2 and the anchor UPF. Step ST1199 indicates data transmission and reception between the anchor UPF and the DN.

The UPF of the non-anchor NW, for example, the intermediate UPF, may perform QoS monitoring reporting to the non-anchor SMF. The UPF may perform the QoS monitoring reporting when the condition of (1) described above is satisfied, for example. For the reporting, for example, signaling of N4 Session Report (see NPL 31) may be used.

The base station may perform QoS monitoring reporting to the non-anchor SMF. The base station may perform the QoS monitoring reporting when the condition of (1) described above is satisfied, for example. The reporting may be performed, for example, via the non-anchor AMF.

(A) to (I) below are disclosed as examples of the information included in the reporting from the intermediate UPF and/or the base station.

(A) Information related to a subject that performs QoS monitoring reporting.
(B) Information related to a QoS type.
(C) Information related to the UE.
(D) Information related to a PDU session.
(E) Information related to a QoS flow.
(F) Information related to a time point.
(G) Information related to uplink/downlink.
(H) Information related to a measurement value of QoS monitoring.
(I) Any combination of (A) to (H) described above.

The information of (A) described above may be, for example, information related to the UPF itself or information related to the base station itself. This enables, for example, the non-anchor SMF to quickly identify the location of the occurrence of an NW failure.

The pieces of information of (B) to (E) described above may be, for example, pieces of information similar to those of (2) to (5) described above.

(F) described above may include, for example, information related to a QoS type satisfying the condition of (1) described above or may include information related to a time point. This enables, for example, the non-anchor SMF to grasp the time point of the occurrence of an NW failure.

(G) described above may include, for example, information indicating whether the traffic of a QoS monitoring reporting target is uplink or downlink. This enables, for example, an anchor NW apparatus to quickly grasp the uplink/downlink of the traffic for which a QoS monitoring result is to be reported.

(H) described above may include, for example, a measurement result of QoS monitoring. This enables, for example, the reception destination of a QoS monitoring report to grasp a detailed measurement result of QoS monitoring.

The non-anchor SMF may perform QoS monitoring reporting to the anchor SMF. The reporting from the non-anchor SMF to the anchor SMF may be performed in response to QoS monitoring reporting from the UPF and/or the base station to the non-anchor SMF. The report from the non-anchor SMF to the anchor SMF may include the pieces of information of (A) to (I) described above or may include information related to the non-anchor NW, for example, information related to the non-anchor SMF. By including the information related to the non-anchor NW in the report, for example, it is possible to judge whether the report is a report from the anchor NW or a report from the non-anchor NW, and consequently to identify the location of an NW failure.

The anchor UPF may perform QoS monitoring. The QoS monitoring by the anchor UPF may be performed in response to QoS monitoring request from the anchor SMF. In the QoS monitoring with the UE in the anchor UPF, QoS not via the non-anchor NW (in other words, via the anchor NW) and QoS via the non-anchor NW may be monitored separately. The QoS monitoring request from the anchor SMF to the anchor UPF may include information related to the NW involved in the QoS monitoring. A QoS monitoring report from the anchor UPF to the anchor SMF may include information related to the NW involved in the QoS monitoring. This enables, for example, an apparatus (or an NF) that performs NW failure detection to quickly identify the location of a failure.

The anchor SMF may detect an NW failure by using the information included in the report from the non-anchor SMF.

For example, the anchor SMF may detect, based on the fact that the QoS between the UE and the intermediate UPF of one of the NWs is abnormal and the QoS between the UE and the anchor UPF via the other NW is normal, a failure of the intermediate UPF of the one NW.

As another example, the anchor SMF may detect, based on the fact that the QoS between the UE and the intermediate UPF of the one NW is abnormal and the QoS between the UE and the intermediate UPF of the other NW is normal, a failure of the intermediate UPF of the one NW.

As another example, the anchor SMF may detect, based on the fact that the uplink QoS between the UE and the intermediate UPF is normal and the QoS between the UE and the anchor UPF is abnormal, a failure of the anchor UPF.

As another example, the anchor SMF may detect, based on the fact that both the uplink QoS between the UE and the intermediate UPF and the uplink QoS between the UE and the anchor UPF are normal and the downlink QoS between the UE and the intermediate UPF and the downlink QoS between the UE and the anchor UPF are abnormal, a failure between the anchor UPF and the DN.

The intermediate UPF described above may be an intermediate UPF of the anchor NW (for example, UPF #1 illustrated in Fig. 11) or may be an intermediate UPF of the non-anchor NW (for example, UPF #2 illustrated in Fig. 11). The abnormality of the QoS described above may be, for example, that the QoS is equal to or higher than, or exceeds, a certain threshold or that the QoS is equal to or lower than, or becomes below, a certain threshold. The normal QoS described above may be, for example, that the QoS is not abnormal. This enables, for example, the anchor SMF to identify the failure location of an NW failure.

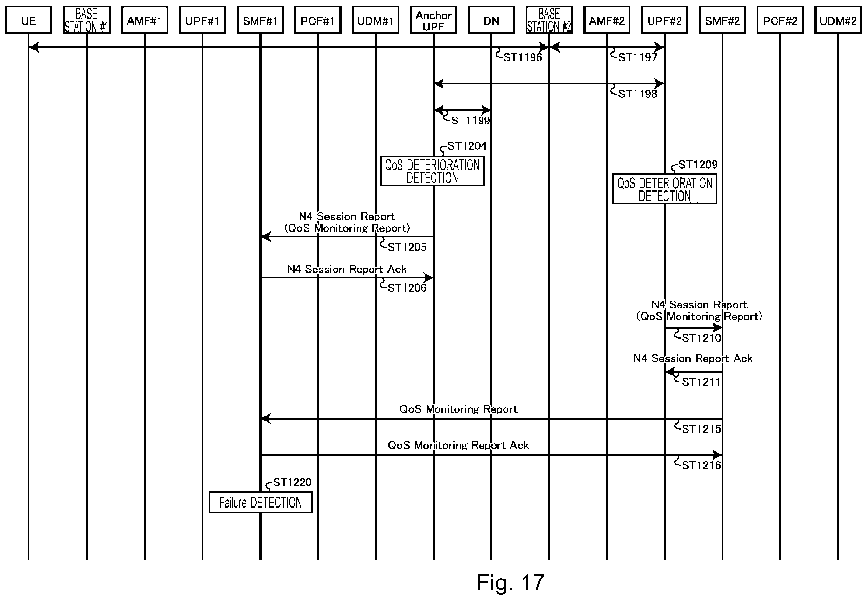

Fig. 17 is a sequence diagram illustrating an example of operation of NW failure detection. Fig. 17 illustrates an example of a failure occurrence in UPF #2. Fig. 17 illustrates an example where the anchor NW performs failure detection. In Fig. 17, each process similar to that in Fig. 12 is denoted with the same step number, and the common description thereof is omitted.

Steps ST1196 to ST1199 in Fig. 17 are the same as those in Fig. 12.

In Step ST1204 in Fig. 17, the anchor UPF detects QoS deterioration. The anchor UPF may detect, for example, QoS deterioration of data from the NW 1091. In Step ST1205, the anchor UPF performs QoS monitoring reporting to SMF #1. For example, signaling of an N4 session report (see NPL 31) may be used for the reporting. In Step ST1206, SMF #1 provides an acknowledgement of the report to the anchor UPF. For the acknowledgement, signaling of N4 session report acknowledgement (see NPL 31) may be used, for example.

In Step ST1209 in Fig. 17, UPF #2 detects QoS deterioration. UPF #2 may detect, for example, QoS deterioration of data passing through the UPF itself. In Step ST1210, UPF #2 performs QoS monitoring reporting to SMF #2. For the reporting, for example, signaling similar to that in Step ST1205 may be used. In Step ST1211, SMF #2 provides an acknowledgement to the reporting, to UPF #2. For the ACK, signaling similar to that in Step ST1206 may be used, for example.

In Step ST1215 in Fig. 17, SMF #2 performs QoS monitoring reporting to SMF #1. SMF #2 may perform the reporting in response to reception of the information of (7-2) described above from UPF #2. The report may include information related to Step ST1210 or may include information related to a UPF. The information related to a UPF may be, for example, information related to the UPF that has performed the QoS monitoring reporting. In Step ST1216, SMF #1 performs response to the request, to SMF #2. In the example illustrated in Fig. 17, the response may be acknowledgement.

In Step ST1220 illustrated in Fig. 17, SMF #1 detects an NW failure. In the example illustrated in Fig. 17, SMF #1 detects a failure of UPF #2. SMF #1 may detect a failure of UPF #2 by using the QoS monitoring report from the anchor UPF and the QoS monitoring report from UPF #2.

Fig. 17 illustrates an example of a failure occurrence in UPF #2. However, the failure occurrence may be between UPF #2 and the anchor UPF or may be between UPF #2 and base station #2.

Fig. 17 illustrates an example where Step ST1216 corresponds to acknowledgement. However, the response may be negative acknowledgement. SMF #2 may retransmit a QoS monitoring report in response to NACK. This enables, for example, SMF #1 to correct an error in report contents, which consequently enables appropriate detection of an NW failure.

Another solution will be disclosed. An NW in which an NW failure has occurred detects the NW failure. The NW may be the anchor NW or may be the non-anchor NW. For example, the anchor SMF may perform the detection, or the non-anchor SMF may perform the detection.

Each NW may determine information related to QoS monitoring, for example, a QoS monitoring policy, in the NW. For example, the PCF of each NW may determine the information. As another example, an application function (AF) may determine information related to QoS monitoring. The AF may notify the PCF of each NW of the information. The SMF of each NW may acquire the QoS monitoring policy as the information from the PCF of the NW. The NWs described above may include the non-anchor NW. The SMF of each NW may determine a QoS monitoring configuration by using the acquired QoS monitoring policy.

As another example, the anchor NW may determine the information related to the QoS monitoring in the non-anchor NW. For example, the anchor PCF may determine the information. As another example, the AF may determine information related to QoS monitoring. The AF may notify the anchor PCF of the information. The anchor SMF may acquire the information from the anchor PCF. The anchor SMF may notify the non-anchor NW apparatus, for example, a non-anchor SMF, of the information.

The SMF of each NW may make a QoS monitoring request to the UPF of the NW. For example, the SMF of each NW may make the request to the UPF of the NW itself. The request may include a QoS monitoring configuration. The request may include information related to (1) to (10) described above.

The SMF of each NW may make a QoS monitoring request to the base station of the NW. The request may be performed via the AMF of each NW, for example. The request may include a QoS monitoring configuration. The request may include information related to (1) to (10) described above.

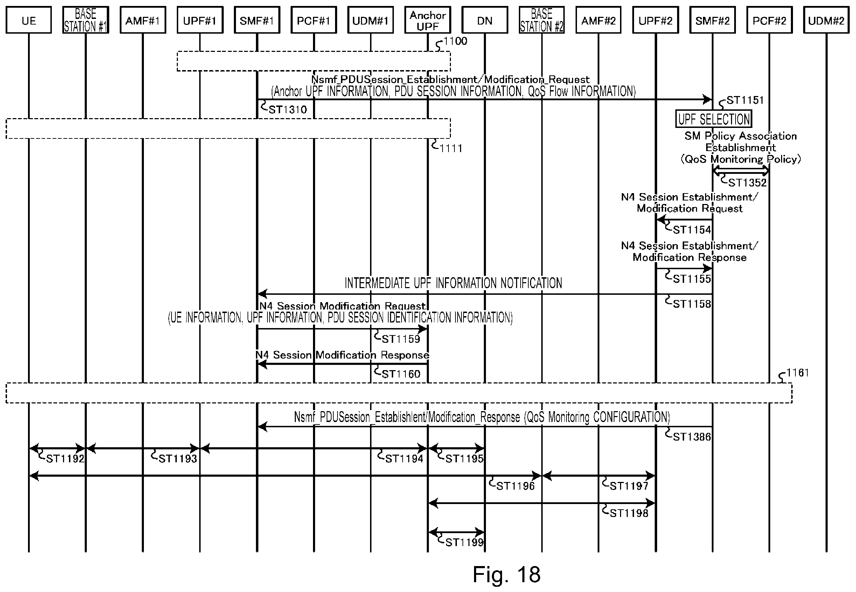

Fig. 18 is a sequence diagram illustrating another example of the QoS monitoring configuration operation. In the example illustrated in Fig. 18, QoS monitoring is configured for UPF #1, the anchor UPF, and UPF #2. Fig. 18 illustrates a case where the non-anchor NW determines a configuration related to QoS monitoring in the non-anchor NW. In the example in Fig. 18, a case where QoS monitoring request is performed simultaneously with the PDU session establishment, but the QoS monitoring request may be performed simultaneously with PDU session modification, or PDU session modification for the QoS monitoring request may be performed. In the example illustrated in Fig. 18, a PDU session is established in each of both the NW 1090 and the NW 1091. In Fig. 18, each process similar to that in Fig. 12 is denoted with the same number, and the common description thereof is omitted.

The procedure 1100 in Fig. 18 is the same as those in Fig. 12 and Fig. 13.

In Step ST1310 illustrated in Fig. 18, SMF #1 requests PDU session establishment from SMF #2. Step ST1310 may correspond, for example, to PDU session modification request. The request may include information that the QoS monitoring policy and/or the QoS monitoring configuration is determined in the NW 1091 or need not include the QoS monitoring policy and/or the QoS monitoring configuration. The request may include information related to the UE, may include information related to the anchor UPF, may include information related to the PDU session, or may include information related to a QoS flow. For Step ST1310, signaling similar to that in Step ST1110 in Fig. 12 may be used. SMF #2 may initiate operation of PDU session establishment or may initiate operation of PDU session modification, in response to Step ST1310. SMF #2 may initiate operation of QoS monitoring configuration determination in the NW 1091 in response to Step ST1310.

The procedure 1111 in Fig. 18 is the same as those in Fig. 12 and Fig. 14.

Step ST1151 in Fig. 18 is similar to those in Fig. 12 and Fig. 15.

In Step ST1352 illustrated in Fig. 18, a procedure of session management policy association establishment is performed between SMF #2 and PCF #2. The procedure may be, for example, a procedure disclosed in clause 4.16.4 of NPL 31 (3GPP TS23.502). In Step ST1352, SMF #2 may request a QoS monitoring policy from PCF #2. The request may be performed in response to Step ST1310. The request for the QoS monitoring policy may be performed, for example, when the request in Step ST1310 includes information indicating that a QoS monitoring policy and/or a QoS monitoring configuration is determined in the NW 1091, or when the request in Step ST1310 does not include a QoS monitoring policy and/or a QoS monitoring configuration. PCF #2 may notify SMF #2 of a QoS monitoring policy. SMF #2 may determine a QoS monitoring configuration by using the QoS monitoring policy. In Step ST1352, a procedure of session management policy association modification may be performed. The procedure of session management policy association modification may be, for example, the procedure disclosed in clause 4.16.5 of NPL 31 (3GPP TS23.502).

Steps ST1154 and ST1155 in Fig. 18 are the same as those in Fig. 12 and Fig. 15.

Steps S1158 to ST1160 in Fig. 18 are the same as those in Fig. 12.

The procedure 1161 illustrated in Fig. 18 is the same as those in Fig. 12 and Fig. 16.

In Step ST1386 illustrated in Fig. 18, SMF #2 performs response to the PDU session establishment request, to SMF #1. Response to the PDU session modification request may be performed. Step ST1386 may be performed as a response to Step ST1310. The response in Step ST1386 may include a QoS monitoring policy and/or a QoS monitoring configuration. The QoS monitoring policy and/or the QoS monitoring configuration may be, for example, a QoS monitoring policy determined by PCF #2 in Step ST1352 or may be a QoS monitoring configuration determined by SMF #2.

Steps ST1192 to ST1199 in Fig. 18 are the same as those in Fig. 12.

The UPF of each NW may perform a QoS monitoring reporting to the SMF of the NW. The UPF may perform the QoS monitoring reporting when the condition of (1) described above is satisfied, for example. For the reporting, for example, signaling of N4 Session Report (see NPL 31) may be used.

The base station of each NW may perform a QoS monitoring reporting to the SMF of the NW. The base station may perform the QoS monitoring reporting when the condition of (1) described above is satisfied, for example. The report may be performed via the AMF of each NW, for example.

The report from the UPF and/or the base station of each NW to the SMF may include information similar to (A) to (I) described above.

The non-anchor SMF may detect an NW failure by using the information included in the report. For example, the non-anchor SMF may detect a failure of an intermediate UPF, based on the fact that the QoS between the UE and the intermediate UPF is abnormal, or may detect a failure of the anchor UPF, based on the fact that the QoS between the UE and the intermediate UPF is normal and the QoS between the UE and the anchor UPF is abnormal. The intermediate UPF described above may be an intermediate UPF of the non-anchor NW, for example. The abnormality of the QoS described above may be, for example, that the QoS is equal to or higher than, or exceeds, a certain threshold or that the QoS is equal to or lower than, or becomes below, a certain threshold. The normal QoS described above may be, for example, that the QoS is not abnormal. This enables, for example, the non-anchor SMF to identify the failure location of an NW failure.

The anchor SMF may perform QoS monitoring reporting to the non-anchor SMF. For example, the anchor SMF may perform the reporting to the non-anchor SMF, based on the presence of the QoS monitoring report from the anchor UPF of the NW itself, may perform the reporting, based on the absence of QoS monitoring from the intermediate UPF, or may perform the reporting, based on both of the above. The non-anchor SMF may detect an NW failure by using the above-described information included in the report. This enables, for example, the non-anchor SMF to detect a failure of only the intermediate UPF of the non-anchor NW.

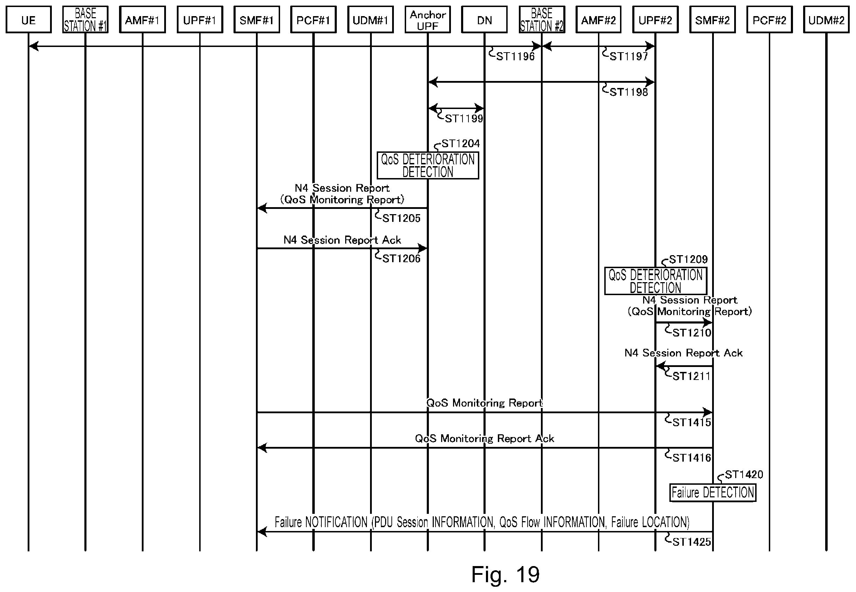

Fig. 19 is a sequence diagram illustrating another example of the operation of NW failure detection. Fig. 19 illustrates an example of a failure occurrence in UPF #2. Fig. 19 illustrates an example where the non-anchor NW performs failure detection. In Fig. 19, each process similar to those in Fig. 12 and 17 is denoted with the same step number, and the common description thereof is omitted.

Steps ST1196 to ST1199 in Fig. 19 are the same as those in Fig. 12.

Steps ST1204 to ST1211 in Fig. 19 are the same as those in Fig. 17.

In Step ST1415 in Fig. 19, SMF #1 performs QoS monitoring reporting to SMF #2. SMF #1 may perform the reporting in response to transmission of the information of (7-2) described above to SMF #2. The report may include the information reported in Step ST1205, may include information related to a UPF, or may include information related to an involved NW in the QoS monitoring report from the anchor UPF. The information related to the UPF may be, for example, information related to the UPF that has performed the QoS monitoring reporting. In Step ST1416, SMF #2 performs response to the request, to SMF #1. In the example illustrated in Fig. 19, the response may be ACK.

In Step ST1420 illustrated in Fig. 19, SMF #2 detects an NW failure. In the example illustrated in Fig. 19, SMF #2 detects a failure of UPF #2. SMF #2 may detect a failure of UPF #2 by using the QoS monitoring report from the anchor UPF and the QoS monitoring report from UPF #2.

In Step ST1425 illustrated in Fig. 19, SMF #2 may notify SMF #1 of the information related to the NW failure. The notification may include information related to a failure location, may include information related to a PDU session, or may include information related to a QoS flow. In the example illustrated in Fig. 19, the information related to the failure location may be information related to UPF #2. SMF #1 may grasp the NW failure in response to Step ST1425.

Fig. 19 illustrates an example of a failure occurrence in UPF #2. However, the failure occurrence may be between UPF #2 and the anchor UPF or may be between UPF #2 and base station #2.

Fig. 19 illustrates an example in which Step ST1416 corresponds to acknowledgement. However, the response may be negative acknowledgement. SMF #1 may retransmit QoS monitoring report in response to a NACK. This enables, for example, SMF #2 to correct an error in report contents, and consequently enables appropriate detection of an NW failure.

A PDU session modification request to the UE may be made from the anchor NW. For example, the anchor NW may make notification about the information related to the PDU session involving the non-anchor NW.

The non-anchor NW, for example, the non-anchor SMF, may notify the anchor NW, for example, the anchor SMF, of information related to PDU session modification of the UE. For example, the signaling of Nsmf_PDUSession_Modification_Response (see NPL 31) may be used for the notification. The notification may include, for example, information related to NAS signaling (which may be hereinafter referred to as NAS signaling information). The NAS signaling may be, for example, NAS signaling related to PDU session modification. The NAS signaling may be, for example, NAS signaling from the non-anchor AMF to the UE.

The non-anchor SMF may request NAS signaling information from the non-anchor AMF. The NAS signaling may be, for example, NAS signaling related to PDU session modification. The non-anchor AMF may notify the non-anchor SMF of the NAS signaling information. The notification from the non-anchor AMF to the non-anchor SMF may be performed in response to the request from the non-anchor SMF to the non-anchor AMF.

The NAS signaling may include information related to RRC signaling (which may be hereinafter referred to as RRC signaling information). The RRC signaling may be, for example, RRC signaling related to PDU session modification. The RRC signaling may be RRC signaling from the non-anchor base station to the UE. The non-anchor AMF may request RRC signaling information from the non-anchor base station. The non-anchor base station may notify the non-anchor AMF of the RRC signaling information. The notification from the non-anchor base station to the non-anchor AMF may be performed in response to the request from the non-anchor AMF to the non-anchor base station.

The QoS monitoring request from the anchor NW (for example, the anchor SMF) to the non-anchor NW (for example, the non-anchor NW) may include information indicating that a PDU session modification request to the UE is transmitted from the anchor NW. The non-anchor NW (for example, the non-anchor SMF) may notify the anchor NW (for example, the anchor SMF) of the information related to the PDU session modification of the UE, in response to reception of the information.

The anchor SMF may notify the anchor AMF of the PDU session modification. The anchor AMF may notify the UE of the PDU session modification. The notification may be performed via the base station of the anchor NW (which may be hereinafter referred to as an anchor base station). The UE may modify the PDU session configuration of the UE itself in response to the notification.

The notification from the anchor SMF to the anchor AMF may be performed in response to notification of information related to the PDU session request from the non-anchor SMF to the anchor SMF. The notification from the anchor SMF to the anchor AMF may include information related to NAS signaling. The NAS signaling may include NAS signaling in the anchor NW or may include NAS signaling in the non-anchor NW. This enables, for example, the UE to modify the PDU session configuration related to each of the anchor NW and the non-anchor NW and consequently enables communication efficiency in the communication system to be improved.

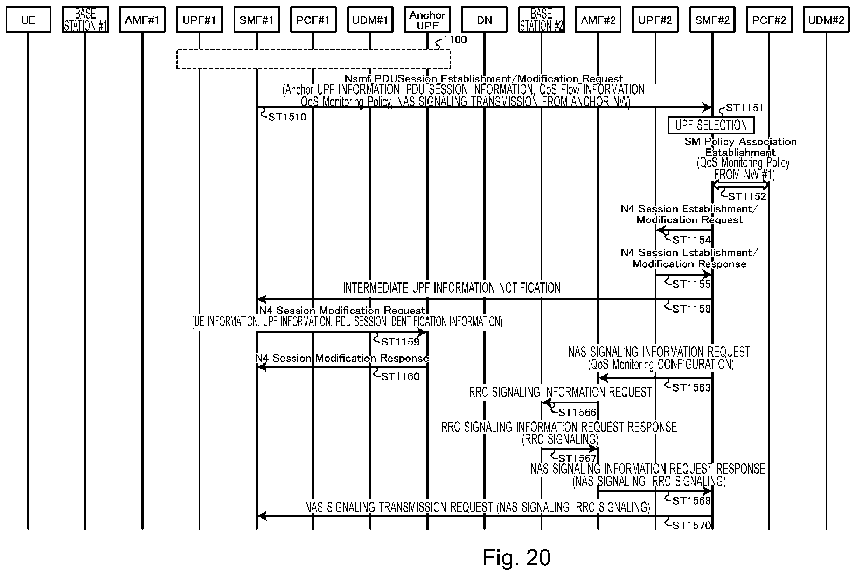

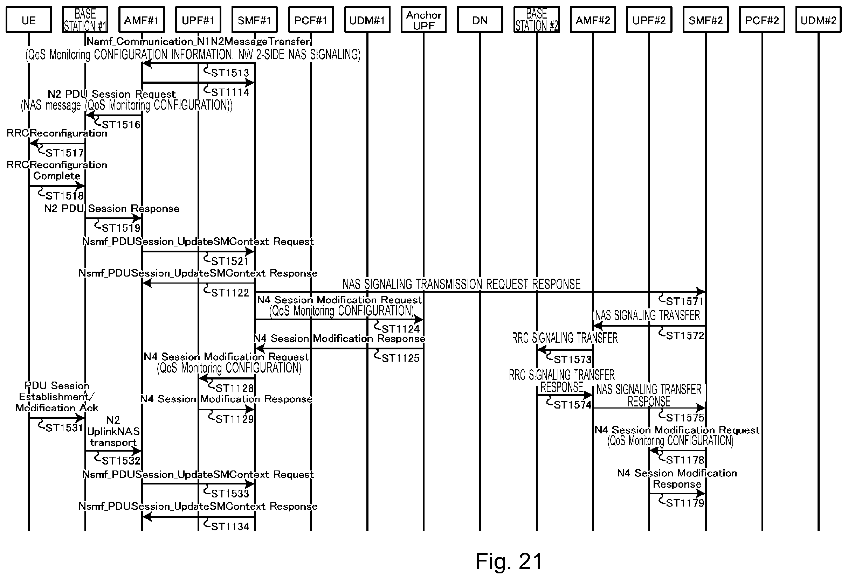

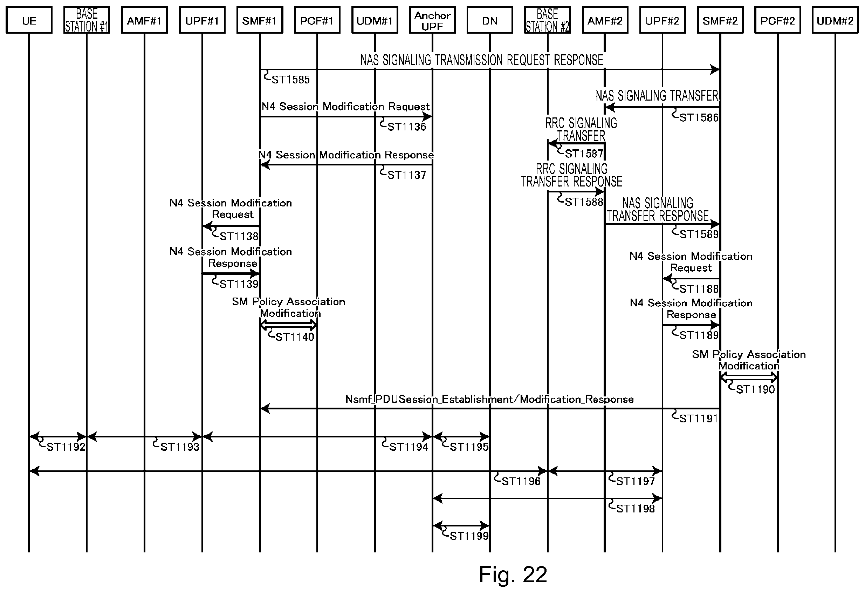

Fig. 20, Fig. 21, and Fig. 22 are sequence diagrams illustrating another example of the QoS monitoring configuration operation. Fig. 20 illustrates a first part of a sequence, Fig. 21 illustrates a middle part of the sequence, and Fig. 22 illustrates the end part of the sequence. Fig. 20, Fig. 21, and Fig. 22 illustrate one series of operations (QoS monitoring configuration operation). In the example illustrated in Fig. 20, Fig. 21, and Fig. 22, the QoS monitoring is configured for UPF #1, the anchor UPF, and UPF #2. Fig. 20, Fig. 21, and Fig. 22 illustrate a case where the anchor NW determines a configuration related to QoS monitoring. In the example in Fig. 20, Fig. 21, and Fig. 22, a case where QoS monitoring request is performed simultaneously with the PDU session establishment, but the QoS monitoring request may be performed simultaneously with PDU session modification, or PDU session modification for the QoS monitoring request may be performed. In the example illustrated in Fig. 20, Fig. 21, and Fig. 22, a PDU session is established in both the NW 1090 and the NW 1091. In the example illustrated in Fig. 20, Fig. 21, and Fig. 22, the NW 1190 makes notification about a PDU session establishment/modification request from the NW 1091 to the UE. In Fig. 20, Fig. 21, and Fig. 22, each process similar to that in Fig. 12 is denoted with the same number, and the common description thereof is omitted.

The procedure 1100 illustrated in Fig. 20 is the same as those in Fig. 12 and Fig. 13.

In Step ST1510 illustrated in Fig. 20, SMF #1 requests PDU session establishment from SMF #2. The request may include information indicating that the PDU session establishment/modification request to the UE is transmitted from the anchor NW or may include information similar to the above-described information included in the request transmitted in Step ST1110 illustrated in Fig. 12. For Step ST1510, signaling similar to that in Step ST1110 illustrated in Fig. 12 may be used.

Steps ST1151 to ST1160 illustrated in Fig. 20 are similar to those in Fig. 12 and Fig. 15.

In Step ST1563 illustrated in Fig. 20, SMF #2 requests NAS signaling information from AMF #2. The NAS signaling may be, for example, NAS signaling related to PDU session establishment/modification. In Step ST1566, AMF #2 requests RRC signaling information from base station #2. The RRC signaling may be, for example, RRC signaling related to PDU session establishment/modification. In Step ST1567, base station #2 notifies AMF #2 of the RRC signaling information. In Step ST1568, AMF #2 notifies SMF #2 of the NAS signaling information. Step ST1568 may include the RRC signaling information notified from base station #2 in Step ST1567.

In Step ST1570 illustrated in Fig. 20, SMF #2 notifies SMF #1 of the information related to PDU session modification. The notification may be performed in a NAS signaling transmission request, or the request may be included in the notification. The notification and/or the request may include information related to the NAS signaling. The information related to the NAS signaling may include the information notified in Step ST1568.

In Steps ST1513 and ST1114 of Fig. 21, processes similar to those performed in Steps ST1113 and ST1114 illustrated in Fig. 12 and Fig. 14, respectively, are performed. The signaling in Step ST1513 may include the NAS signaling information included in the request received in Step ST1570 or may include the RRC signaling information.

In Steps ST1516 and ST1517 illustrated in Fig. 21, processes similar to those performed in Steps ST1116 and ST1117 illustrated in Fig. 12 and Fig. 14, respectively, are performed. Steps ST1516 and ST1517 may include the NAS signaling information included in the request received in Step ST1570 or may include the RRC signaling information.

In Steps ST1518 to ST1521 illustrated in Fig. 21, processes similar to those in Steps ST1118 to ST1121 illustrated in Fig. 12 and Fig. 14, respectively, are performed. The UE may include RRC signaling for base station #2 or may include NAS signaling for AMF #2, in Step ST1518. Steps ST1519 and ST1521 may include the RRC signaling for base station #2 or may include the NAS signaling for AMF #2.

Step ST1122 illustrated in Fig. 21 is the same as those in Fig. 12 and Fig. 14.

In Step ST1571 illustrated in Fig. 21, SMF #1 performs response to the NAS signaling transmission request, to SMF #2. The response may be made as a response to Step ST1570. Step ST1571 may include the RRC signaling for base station #2 or may include the NAS signaling for AMF #2.

In Step ST1572 illustrated in Fig. 21, SMF #2 transfers the NAS signaling to AMF #2. The NAS signaling may include the RRC signaling for base station #2 included in the response in Step ST1571 or may include the NAS signaling for AMF #2. AMF #2 acquires the NAS signaling from the UE through Step ST1572.

In Step ST1573 illustrated in Fig. 21, AMF #2 transfers the RRC signaling to base station #2. The RRC signaling may be, for example, RRC signaling for base station #2 included in Step ST1571. Base station #2 acquires the RRC signaling from the UE through Step ST1573.

In Step ST1574 illustrated in Fig. 21, base station #2 performs response to Step ST1573 to AMF #2. In Step ST1575, AMF #2 performs response to Step ST1572 to SMF #2.

Steps ST1178 and ST1179 illustrated in Fig. 21 are the same as those in Fig. 12 and Fig. 16.

Steps ST1124 to ST1129 illustrated in Fig. 21 are the same as those in Fig. 12 and Fig. 14.

In Steps ST1531 to ST1533 illustrated in Fig. 21, processes similar to those in Steps ST1131 to ST1133 illustrated in Fig. 12 and Fig. 14, respectively, are performed. The UE may include RRC signaling for base station #2 or may include NAS signaling for AMF #2, in Step ST1531. Steps ST1532 and ST1533 may include the RRC signaling for base station #2 or may include the NAS signaling for AMF #2.

Step ST1134 illustrated in Fig. 21 is the same as those in Fig. 12 and Fig. 14.

In Steps ST1585 to ST1589 illustrated in Fig. 22, processes similar to those in Steps ST1571 to ST1575 in Fig. 21, respectively, are performed.

Steps ST1136 to ST1140 illustrated in Fig. 22 are the same as those in Fig. 12 and Fig. 14.

Steps ST1188 to ST1199 illustrated in Fig. 22 are the same as those in Fig. 12 and Fig. 16.

An NW that determines a QoS monitoring policy and an NW that determines a QoS monitoring configuration may be the same. This enables, for example, complexity in the communication system to be prevented.

As another example, an NW that determines a QoS monitoring policy and an NW that determines a QoS monitoring configuration may be different from each other. For example, a QoS monitoring policy may be determined by the anchor NW (for example, the anchor PCF), or a QoS monitoring configuration may be determined by the non-anchor NW (for example, the non-anchor SMF). A QoS monitoring policy may be determined by the anchor NW (for example, the anchor PCF), or a QoS monitoring configuration may be determined by the non-anchor NW (for example, the non-anchor SMF). The anchor SMF may notify the non-anchor SMF of the QoS monitoring policy. The notification may be included in Step ST1110 in Fig. 12, for example. The non-anchor SMF may determine a QoS monitoring configuration by using the QoS monitoring policy. The non-anchor SMF may notify the intermediate UPF and/or the base station in the NW itself of the QoS monitoring configuration. With this, it is possible, for example, to determine a QoS monitoring configuration in each NW while avoiding inconsistency of a QoS monitoring policy between the NWs, for example, and consequently improve flexibility in QoS monitoring.

A QoS monitoring report may be transmitted to an NWDAF. The NWDAF may be the NWDAF of the anchor NW, for example. The reporting to the NWDAF may be performed by the SMF, by the AMF, by the UPF, or by the base station. The NWDAF may detect an NW failure or may detect the location of an NW failure by using the report. The NWDAF may modify an NW configuration by using the report. This enables, for example, an NW configuration to be modified according to the situation of an NW failure, and consequently the robustness of the communication system to be improved.

QoS monitoring configuration to the base station may be directly performed by the SMF, or QoS monitoring reporting from the base station may be directly performed on the SMF. An interface between the base station and the SMF may be provided. This enables, for example, the amount of processing in the AMF to be reduced, for example.

An NW that performs NW failure detection and an NW that determines a QoS monitoring policy may be the same. An NW that performs NW failure detection and an NW that determines a QoS monitoring configuration may be the same. This enables, for example, complexity in the communication system to be prevented.

As another example, an NW that performs an NW failure detection and an NW that determines a QoS monitoring policy may be different from each other, or an NW that performs NW failure detection and an NW that determines a QoS monitoring configuration may be different from each other. This enables, for example, flexibility in the communication system to be improved.

An NW that detects an NW failure may be different depending on the form of a PDU session. For example, in a case of employing a configuration where a PDU session is branched to a plurality of NWs, the anchor NW apparatus (for example, the anchor SMF) may detect an NW failure. As another example, in a case of employing a configuration where a PDU session is switched between NWs, an NW failure may be detected in each NW. This enables, for example, complexity in the communication system to be prevented.

According to this embodiment 1, it is possible to grasp the location of an NW failure in the communication system, and consequently to execute recovery from the NW failure.

### Alteration 1 of Embodiment 1.

Detection of a failure of a Uu interface may be performed. For example, detection of a Uu interface failure in a case where a UE is connected to a plurality of NWs may be performed.

The UE may detect a failure of the Uu interface. For the detection, for example, a method similar to that of detection of a radio link failure (RLF) may be used.

The UE may notify a base station of the failure of the Uu interface. The notification from the UE may be made to a base station of an NW in which no failure has occurred. The base station may be the anchor base station or may be the non-anchor base station. For the notification from the UE to the base station, RRC signaling may be used, MAC signaling may be used, or L1/L2 signaling may be used. The notification may include information related to the UE, may include information related to the NW in which the failure has occurred, may include information related to a PDU session, or may include information related to a QoS flow.

The base station may notify an AMF of the information from the UE. As another example, the base station may notify an SMF of the information from the UE. The notification from the base station to the SMF may be performed via the AMF or may be made directly.

As another example, the UE may notify the AMF of a failure of the Uu interface. For the notification from the UE to the AMF, for example, NAS signaling may be used. The notification from the UE may be made to an AMF of an NW in which no failure has occurred. The AMF may be the anchor AMF or may be the non-anchor AMF. The notification may include information related to the UE, may include information related to a base station, may include information related to an NW in which the failure has occurred, may include information related to a PDU session, or may include information related to a QoS flow. The notification may be performed via the base station.

An AMF may notify an SMF of the information related to the Uu interface failure of the UE. The notification may include, for example, information similar to the information included in the notification of the Uu interface failure from the UE. The SMF of the notification destination may be, for example, the SMF of the same NW as that of the AMF. The notification may be performed, for example, as transfer of the information from the UE to the AMF described above. The SMF may grasp the failure of the Uu interface in response to the notification.

The SMF may notify the SMF of another NW of the information related to the Uu interface failure of the UE. The notification may include, for example, information similar to the information included in the notification of the Uu interface failure from the UE. The SMF of the other NW may be, for example, the SMF of an NW in which the failure of the Uu interface has occurred, an SMF that performs detection of an NW failure, or the anchor SMF. The notification may be performed, for example, as transfer of the information from the AMF to the SMF described above. The SMF of the other NW may grasp the failure of the Uu interface in response to the notification. The SMF of the other NW may perform recovery processing of the NW in response to the notification. The processing may be, for example, any of methods disclosed in embodiment 2 and the subsequent embodiments.

The SMF of the other NW may notify the AMF of the NW itself of the information related to the Uu interface failure of the UE. The notification may include, for example, information similar to the information included in the notification of the Uu interface failure from the UE. The notification may be performed, for example, as transfer of the notification of the information from the other NW to the SMF described above. The AMF may grasp the failure of the Uu interface, based on the information. The AMF may execute processing for connection recovery with the UE, based on the information. For example, the AMF may initiate service request processing. The processing may be, for example, the processing disclosed in clause 4.2.3.3 of NPL 31 (3GPP TS23.502).

According to this alteration 1, it is possible to detect a Uu interface failure in the communication NW, and consequently to quickly execute processing for recovering from a Uu interface failure of a UE.

### Embodiment 2.

Embodiment 2 discloses a method of recovering from an NW failure.

Switching of an intermediate UPF may be performed. The intermediate UPF may be an intermediate UPF of a non-anchor NW, for example. The switching may be performed, for example, in response to detection of a failure of the intermediate UPF of the non-anchor NW.

The switching processing may be performed by an NW apparatus or an NF that has detected the NW failure. For example, an SMF that has detected the NW failure may perform the processing. As another example, the NW apparatus or the NF that has detected the NW failure may request the switching processing from an SMF.

The switching processing may be initiated by the anchor NW. For example, the anchor SMF may initiate the switching processing. The anchor SMF may request switching of a UPF, from the non-anchor SMF. The request may be performed, for example, as a request for PDU session modification. For example, the signaling of
Nsmf_PDUSession_Modification_Request (see NPL 31) may be used for the request.

The request may include information related to the failure of the intermediate UPF. The information may be included in the request as information related to a reason. This enables, for example, the non-anchor SMF to quickly grasp the occurrence of an intermediate UPF failure.

The non-anchor SMF may select a new intermediate UPF (which may be hereinafter referred to as a post-switching intermediate UPF). The non-anchor SMF may establish a connection with the post-switching intermediate UPF.

The non-anchor SMF may request connection establishment from the post-switching intermediate UPF. For example, signaling of an N4 session establishment request (see NPL 31) may be used for the request. The request may include information related to the UE, may include information related to a PDU session, may include information related to a QoS flow, may include information related to the QoS monitoring disclosed in embodiment 1, or may include information related to the anchor UPF. For example, the information related to the anchor UPF being included enables connection between the post-switching intermediate UPF and the anchor UPF to be quickly established.

The post-switching intermediate UPF may respond to the request for connection establishment, to the non-anchor SMF. For the response, for example, signaling of an N4 session establishment response (see NPL 31) may be used. The non-anchor SMF may grasp connection completion of the post-switching intermediate UPF in response to the response.

The non-anchor SMF may request connection release, from an intermediate UPF in which a failure is detected (which may be hereinafter referred to as a faulty intermediate UPF). For the request, for example, signaling of an N4 session release request (see NPL 31) may be used. The request may include information related to the UE, may include information related to a PDU session to be released, or may include information related to a QoS flow to be released. The faulty intermediate UPF may release a resource related to the PDU session and/or the QoS flow by using the information.

The faulty intermediate UPF may respond to the request for connection release, to the non-anchor SMF. For the response, for example, signaling of an N4 session release response (see NPL 31) may be used. The non-anchor SMF may grasp the completion of the release of the faulty intermediate UPF in response to the response.

A communication NW may notify the UE of the modification of the PDU session. The notification may be made, for example, from the NW in which the switching of the intermediate UPF has been performed. For example, the non-anchor NW may notify the UE of the modification of the PDU session. The notification may be made from the anchor AMF to the UE. The non-anchor SMF may request the notification to the UE, from the non-anchor AMF. The notification may be performed in response to the request.

The non-anchor SMF may respond to the request for the UPF switching, to the anchor SMF. For example, the signaling of Nsmf_PDUSession_Modification_Response (see NPL 31) may be used for the response. The response may include information related to the post-switching intermediate UPF. This enables, for example, the anchor SMF to quickly grasp the post-switching intermediate UPF.

The anchor SMF may notify the anchor UPF that the intermediate UPF has been switched or may request switching of the connection with the intermediate UPF from the anchor UPF. The request may include information related to the post-switching intermediate UPF, may include information related to the UE, may include information related to a PDU session, may include information related to a QoS flow, or may include information related to the QoS monitoring configuration disclosed in embodiment 1. For example, the signaling of an N4 session modification request (see NPL 31) may be used for the request. The anchor UPF may switch the connection with the intermediate UPF in response to the request. For example, the anchor UPF may release an N9 interface (see NPL 10) with the faulty intermediate UPF or may establish an N9 interface with the post-switching intermediate UPF, in response to the request.

The anchor UPF may notify the anchor SMF of completion of switching of the connection with the intermediate UPF. For example, the signaling of an N4 session modification response (see NPL 31) may be used for the notification. The anchor SMF may grasp the completion of the switching of the connection with the intermediate UPF in response to the notification.

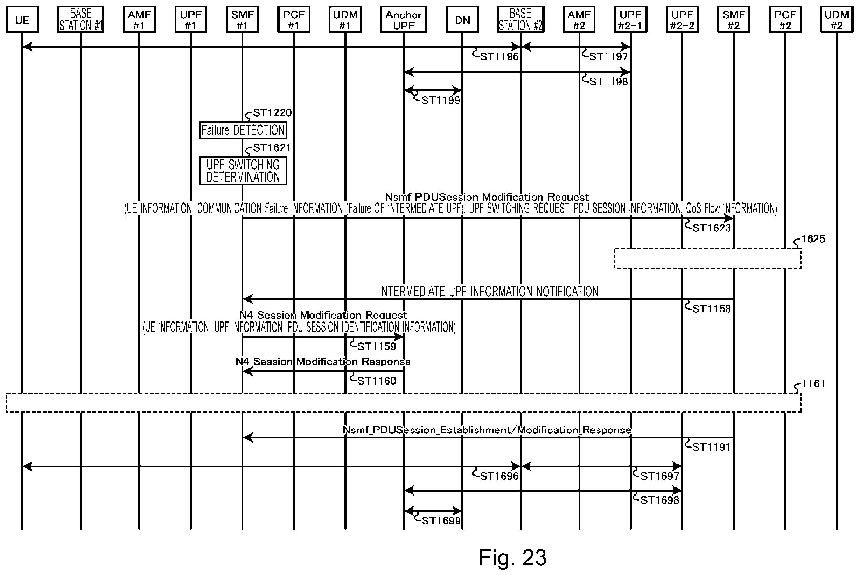

Fig. 23 is a sequence diagram illustrating an example of intermediate UPF switching operation in the non-anchor NW. Fig. 23 illustrates an example where the anchor NW detects an NW failure and the anchor NW determines UPF switching. In the example illustrated in Fig. 23, an intermediate UPF in the NW 1091 is switched from UPF #2-1 to UPF #2-2. In the example illustrated in Fig. 23, each process similar to those in Fig. 12 and Fig. 17 is denoted with the same number, and the common description thereof is omitted.

Steps ST1196 to ST1199 illustrated in Fig. 23 are similar to those in Fig. 12.

Step ST1220 illustrated in Fig. 23 is similar to that in Fig. 17.

In Step ST1621 illustrated in Fig. 23, SMF #1 determines switching of the UPF.

In Step ST1623 illustrated in Fig. 23, SMF #1 requests switching of the UPF, from SMF #2. The request may include information related to a failure of the intermediate UPF, may include information related to a request for UPF switching, may include information related to the UE, may include information related to a PDU session, or may include information related to a QoS flow.

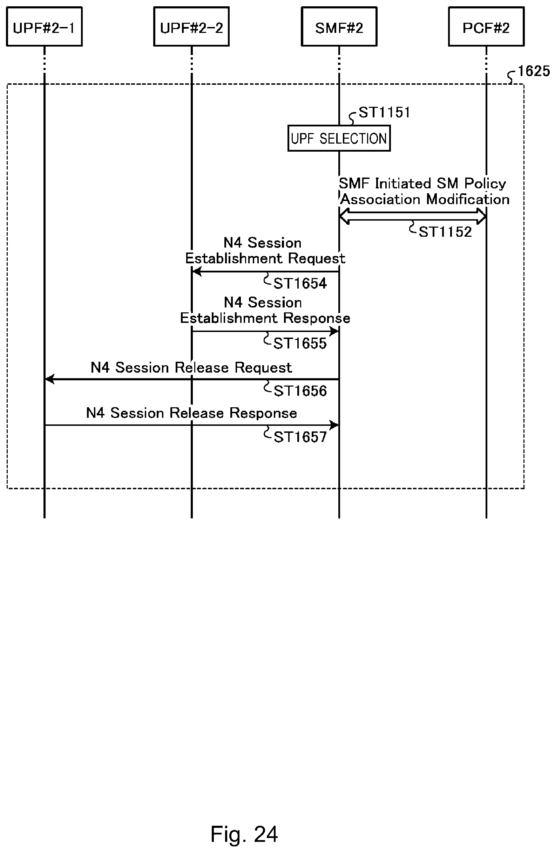

In a procedure 1625 illustrated in Fig. 23, processing related to a post-switching intermediate UPF is performed. The procedure 1625 will be described below. Fig. 24 is a sequence diagram illustrating an example of the procedure 1625 in Fig. 23.

Steps ST1151 and ST1152 illustrated in Fig. 24 are the same as Steps ST1151 and ST1152 of the procedure 1150 illustrated in Fig. 12 and Fig. 15. In Step ST1151 illustrated in Fig. 24, SMF #2 selects UPF #2-2.

In Step ST1654 illustrated in Fig. 24, SMF #2 requests N4 session establishment from UPF #2-2. In response to Step ST1654, UPF #2-2 performs N4 session establishment. In Step ST1655, UPF #2-2 performs response to Step ST1654, to SMF #2.

In Step ST1656 illustrated in Fig. 24, SMF #2 requests N4 session release, from UPF #2-1. In response to Step ST1656, UPF #2-1 performs N4 session release. In Step ST1657, UPF #2-1 performs response to Step ST1656 to SMF #2.

The description returns to Fig. 23, and Steps ST1158 to ST1160 illustrated in Fig. 23 are the same as those in Fig. 12. In Step ST1158 illustrated in Fig. 23, notification about information related to UPF #2-2 is made.

The procedure 1161 illustrated in Fig. 23 is the same as those in Fig. 12 and Fig. 16. In the procedure 1161 illustrated in Fig. 23, UPF #2 may be interpreted as UPF #2-2.

Step ST1191 illustrated in Fig. 23 is the same as that in Fig. 12.

In Steps ST1696 to ST1699 illustrated in Fig. 23, processes similar to those performed in Steps ST1196 to ST1199 illustrated in Fig. 12, respectively, are performed in the UE, base station #2, UPF #2-2, the anchor UPF, and the DN.

As another example of the PDU session modification notification to the UE, the notification may be made from the anchor NW to the UE. For example, the anchor AMF may make the notification to the UE For the notification from the anchor AMF to the UE, the method disclosed in embodiment 1, for example, the method disclosed in Fig. 20 to Fig. 22, may be used.

The anchor SMF may request the notification to the UE, from the anchor AMF. The notification from the anchor AMF to the UE may be made in response to the request. The anchor SMF may make the request to the anchor AMF in response to a response to the request for UPF switching from the non-anchor SMF to the anchor SMF.

Another solution will be disclosed. The processing of intermediate UPF switching may be initiated by the NW to which the intermediate UPF belongs. For example, the non-anchor NW may initiate the processing of the intermediate UPF switching of the non-anchor NW. For example, the non-anchor SMF may initiate the switching processing.

The non-anchor SMF may select a post-switching intermediate UPF, may establish a connection with a post-switching intermediate UPF, or may release a connection with a faulty intermediate UPF. The operation in the non-anchor SMF may be performed in a similar manner to that described above.

The non-anchor SMF may notify the anchor SMF of information related to the UPF switching. The notification may be performed, for example, as a request for PDU session modification. For the notification from the non-anchor SMF to the anchor SMF, for example, the signaling of Nsmf_PDUSession_Modification_Request (see NPL 31) may be used. The notification may include information related to a failure of an intermediate UPF, may include information related to the UE, may include information related to a PDU session, may include information related to a QoS flow, may include information related to a faulty intermediate UPF, may include information related to a post-switching intermediate UPF, or may include information related to the QoS monitoring configuration disclosed in embodiment 1.

The anchor SMF may notify the anchor UPF that the intermediate UPF has been switched or may request switching of the connection with the intermediate UPF from the anchor UPF. The notification and/or the request from the anchor SMF to the anchor UPF may be similar to that described above, for example. The anchor UPF may notify the anchor SMF of completion of switching of the connection with the intermediate UPF. The notification from the anchor UPF to the anchor SMF may be, for example, similar to that described above.

The anchor SMF may respond to the notification described above to the non-anchor SMF. The response may be performed, for example, as a response to a request for PDU session modification. For the response from the anchor SMF to the non-anchor SMF, for example, the signaling of Nsmf_PDUSession_Modification_Response (see NPL 31) may be used.

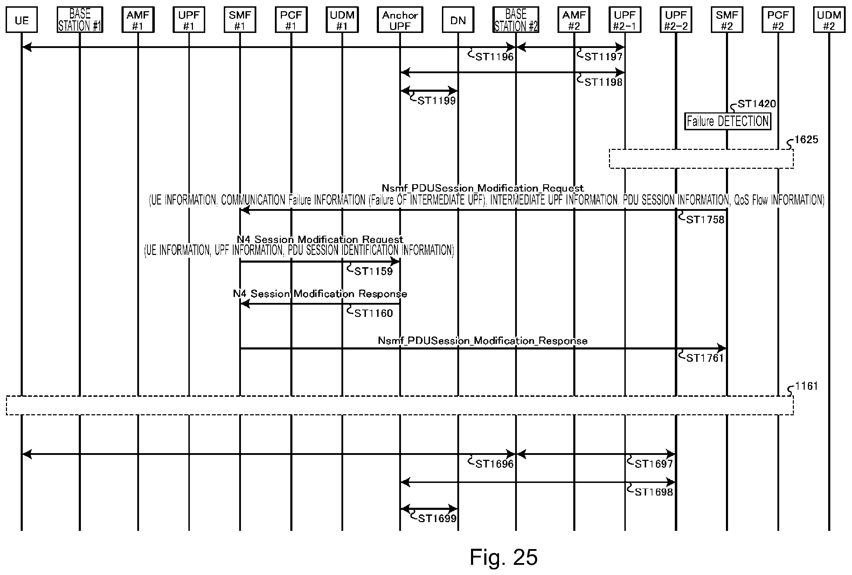

Fig. 25 is a sequence diagram illustrating another example of intermediate UPF switching operation in the non-anchor NW. Fig. 25 illustrates an example where the non-anchor NW detects an NW failure and the non-anchor NW determines UPF switching. In the example illustrated in Fig. 25, an intermediate UPF in the NW 1091 is switched from UPF #2-1 to UPF #2-2. In the example illustrated in Fig. 25, each process similar to those in Fig. 12, Fig. 17, Fig. 19, and Fig. 23 is denoted with the same number, and the common description thereof is omitted.

Steps ST1196 to ST1199 illustrated in Fig. 25 are similar to those in Fig. 12.

Step ST1420 illustrated in Fig. 25 is similar to that in Fig. 19.

The procedure 1625 illustrated in Fig. 25 is the same as those in Fig. 23 and Fig. 24.

In Step ST1758 illustrated in Fig. 25, SMF #2 requests PDU session modification from SMF #1. The request in Step ST1758 may be performed as notification of information related to UPF switching. For example, signaling of Nsmf_PDUSession_Modification_Request (see NPL 31) may be used for Step ST1758. The request may include information related to a failure of an intermediate UPF, may include information related to the UE, may include information related to a PDU session, may include information related to a QoS flow, may include information related to a faulty intermediate UPF, may include information related to a post-switching intermediate UPF, or may include information related to the QoS monitoring configuration disclosed in embodiment 1. SMF #1 may initiate connection processing between the anchor UPF and UPF #2-2 in response to Step ST1758.

Steps ST1159 and ST1160 illustrated in Fig. 25 are the same as those in Fig. 12.

In Step ST1761 illustrated in Fig. 25, SMF #1 performs response to the PDU session modification request, to SMF #2. Step ST1761 may be performed as a response to Step ST1758. For example, signaling of Nsmf_PDUSession_Modification_Response may be used for Step ST1761.

The procedure 1161 illustrated in Fig. 25 is the same as those in Fig. 12 and Fig. 16. In Fig. 25, the processing in Step ST1191 illustrated in Fig. 12 need not be performed.

Steps ST1696 to ST1699 illustrated in Fig. 25 are similar to those in Fig. 23.

An NW that detects an NW failure and an NW that initiates intermediate UPF switching processing may be different from each other. For example, the anchor NW may detect an NW failure, and the non-anchor NW may initiate intermediate UPF switching processing. The anchor SMF may notify the non-anchor SMF of information related to the NW failure. The notification may include information related to a faulty intermediate UPF, may include information related to a PDU session, or may include information related to a QoS flow. The non-anchor SMF may initiate intermediate UPF switching processing in response to the notification.

An NW that initiates the intermediate UPF switching processing may be determined in advance in a standard. For example, an NW that has detected an NW failure may initiate the intermediate UPF switching processing. This enables, for example, the intermediate UPF switching processing to be quickly executed. As another example, an NW in which an NW failure has occurred may initiate the intermediate UPF switching processing.

As another example, the anchor NW may determine an NW that initiates the intermediate UPF switching processing. For example, the anchor NW may determine an NW that initiates the intermediate UPF switching processing in response to detection of an NW failure, or may determine an NW that initiates the intermediate UPF switching processing in response to notification of information related to an NW failure from the non-anchor.

The anchor NW may notify the non-anchor NW of information related to an NW that initiates the intermediate UPF switching processing. As another example, which NW initiates the intermediate UPF switching processing may be judged based on information included in transmission signaling from the anchor SMF to the non-anchor SMF. For example, the anchor NW may initiate the intermediate UPF switching processing when a UPF switching request is included, or the non-anchor NW may initiate the intermediate UPF switching processing when information related to an NW failure is included. This enables, for example, the size of signaling from the anchor NW to the non-anchor NW to be reduced.

As another example, the UE may determine an NW that initiates the intermediate UPF switching processing. The UE may notify the anchor AMF of information related to an NW that initiates the intermediate UPF switching processing. The information may be, for example, preference information from the UE. The anchor AMF may notify the anchor SMF of the information. This enables, for example, the UE to select an NW with low latency with the UE, and consequently the intermediate UPF switching processing to be promptly executed.

A PDU session modification request to the UE may be made from the anchor NW. For example, the anchor NW may make notification about the information related to the PDU session involving the non-anchor NW. The PDU session modification request from the anchor NW may be performed, for example, by using a method similar to the method disclosed in embodiment 1. For example, the method disclosed in Fig. 20 to Fig. 22 may be used. With this, it is possible to prevent, for example, a conflict between a PDU session request transmitted from the anchor NW to the UE and a PDU session request transmitted from the non-anchor NW to the UE, and consequently prevent a malfunction of the UE.

The faulty intermediate UPF may be released. The release may be applied, for example, when the UE connects to the anchor UPF via a plurality of intermediate UPFs of the non-anchor NW, and a part of the plurality of intermediate UPFs encounters a failure. The UE may connect to the anchor UPF via an intermediate UPF in which no failure has occurred among the plurality of intermediate UPFs. The response to the request for UPF switching and/or the notification of information related to UPF switching from the non-anchor SMF to the anchor SMF may include information related to the intermediate UPF in which no failure has occurred or may include information related to the base station of the non-anchor NW. This enables, for example, flexibility of path switching at a failure occurrence in the communication system to be improved.

The non-anchor base station and the anchor UPF may be directly connected. For example, the direct connection described above may be performed in response to a failure of the intermediate UPF in the non-anchor NW. The non-anchor SMF may indicate the non-anchor base station to connect to the anchor UPF. The indication may be performed via the non-anchor AMF. The indication may include information (for example, an address) related to the anchor UPF. The non-anchor base station may initiate connection with the anchor UPF in response to the indication. The non-anchor SMF may notify the anchor SMF of information related to the non-anchor base station. The anchor SMF may notify the anchor UPF of information related to the non-anchor base station. The anchor UPF may initiate connection with the non-anchor base station in response to the notification. This enables, for example, latency in the non-anchor NW to be reduced.

The non-anchor base station and the anchor UPF may be connected via SEPPs. As a method of the connection, a method similar to the operation of the direct connection between the non-anchor base station and the anchor UPF described above may be used.

According to embodiment 2, it is possible to recover from an intermediate UPF failure of the non-anchor NW.

### Embodiment 3.

Embodiment 3 discloses another example of the method of recovering from an NW failure.

Switching of an NW serving as a data path may be performed. For example, in data transmission and reception via the non-anchor NW, the path of the data transmission and reception may be switched to the anchor NW in response to detection of a failure of an intermediate UPF of the non-anchor NW.

The switching of the NW serving as the path may be initiated by the anchor NW. For example, the anchor NW may initiate the switching in response to detection of a failure of the non-anchor NW. For example, the anchor SMF may initiate the switching.

The anchor SMF may notify the non-anchor NW of information related to the NW switching, or may request release of the faulty intermediate UPF, from the non-anchor NW. The notification and/or the request may be made, for example, to the non-anchor SMF. The notification and/or the request may be performed, for example, as request for PDU session modification or as request for PDU session release. For the notification and/or the request, for example, the signaling of Nsmf_PDUSession_Modification_Request (see NPL 31) may be used, or the signaling of Nsmf_PDUSession_Release_Request (see NPL 31) may be used. The notification and/or the request may include information related to the NW failure, may include information related to the faulty intermediate UPF, may include information related to the UE, may include information related to a PDU session, or may include information related to a QoS flow.

The non-anchor NW may release the resource of the faulty intermediate UPF. For example, the non-anchor SMF may request connection release from the faulty intermediate UPF. The request may be performed, for example, in a similar method to the method disclosed in embodiment 2.

The non-anchor SMF may notify the non-anchor AMF of the release of the resource of the faulty intermediate UPF. The notification may include a request for NAS signaling information. The NAS signaling may be, for example, NAS signaling related to PDU session modification. The non-anchor AMF may notify the non-anchor SMF of the NAS signaling information. The notification from the non-anchor AMF to the non-anchor SMF may be performed in response to the request from the non-anchor SMF to the non-anchor AMF.

The NAS signaling may include information related to RRC signaling. The RRC signaling may be, for example, RRC signaling related to PDU session modification. The non-anchor AMF may request RRC signaling information from the non-anchor base station. The non-anchor base station may notify the non-anchor AMF of the RRC signaling information. The notification from the non-anchor base station to the non-anchor AMF may be performed in response to the request from the non-anchor AMF to the non-anchor base station.

The non-anchor SMF may notify the anchor SMF of information related to release of the faulty intermediate UPF. The notification may be performed, for example, as a response to a PDU session modification request or as a response to a PDU session release request. For the notification, for example, the signaling of Nsmf_PDUSession_Modification_Response (see NPL 31) may be used, or the signaling of Nsmf_PDUSession_Release_Response (see NPL 31) may be used. The notification may include, for example, information related to NAS signaling. The NAS signaling may be, for example, NAS signaling related to PDU session modification. The NAS signaling may be, for example, NAS signaling acquired from the non-anchor AMF. The NAS signaling may include RRC signaling. The RRC signaling may be, for example, RRC signaling related to PDU session release. The RRC signaling may be, for example, RRC signaling acquired from the non-anchor base station.

The anchor SMF may perform UPF configuration. The UPF may be an intermediate UPF of the anchor NW or may be an anchor UPF, for example. The UPF configuration may be, for example, resource reservation for the UPF for communication of the UE. In the UPF configuration, for example, some or all of the processes disclosed in the PDU session establishment (clause 4.3.2 of NPL 31) may be performed.

The anchor SMF may perform configuration related to NW switching, on the anchor UPF. For example, the anchor SMF may indicate the anchor UPF to release the connection with the faulty intermediate UPF. In response to the indication, the anchor UPF may release the connection with the faulty intermediate UPF.

The anchor SMF may notify the anchor AMF of the PDU session modification. The anchor AMF may notify the UE of the PDU session modification. The notification may be performed via the base station of the anchor NW (which may be hereinafter referred to as an anchor base station). The UE may modify the PDU session configuration of the UE itself in response to the notification.

The notification from the anchor SMF to the anchor AMF may be performed in response to notification of information related to the release of the faulty intermediate UPF from the non-anchor SMF to the anchor SMF. The notification from the anchor SMF to the anchor AMF may include information related to NAS signaling. The NAS signaling may include NAS signaling in the anchor NW or may include NAS signaling in the non-anchor NW. This enables, for example, the UE to modify the PDU session configuration related to each of the anchor NW and the non-anchor NW and consequently enables communication efficiency in the communication system to be improved.

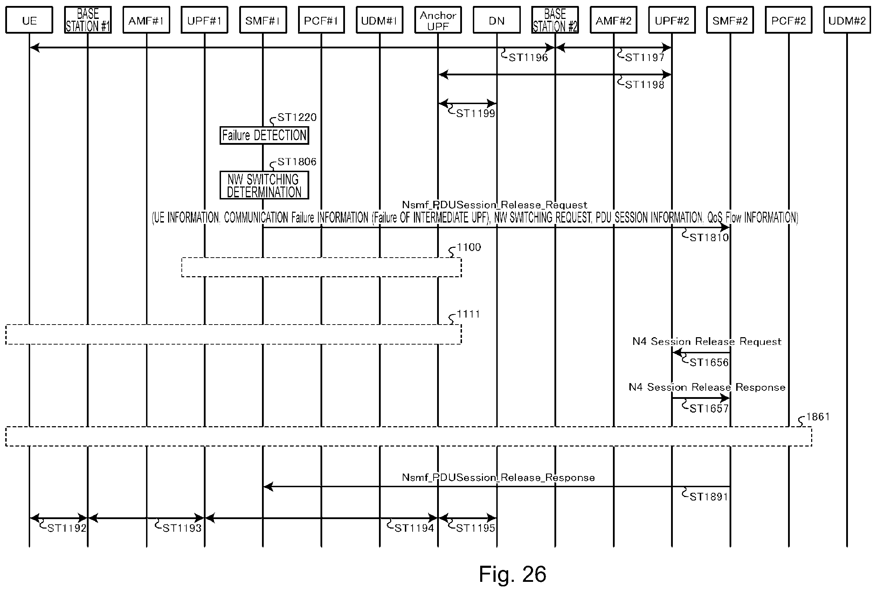

Fig. 26 is a sequence diagram illustrating an example of NW switching operation in the non-anchor NW. Fig. 26 illustrates an example where the anchor NW detects an NW failure and the anchor NW determines NW switching. In the example illustrated in Fig. 26, the NW is switched from the NW 1091 to the NW 1090. In the example illustrated in Fig. 26, each process similar to those in Fig. 12 and Fig. 17 is denoted with the same number, and the common description thereof is omitted.

Steps ST1196 to ST1199 illustrated in Fig. 26 are the same as those in Fig. 12. Step ST1220 illustrated in Fig. 26 is the same as that in Fig. 17.

In Step ST1806 illustrated in Fig. 26, SMF #1 determines switching of an NW serving as a data path. In the example illustrated in Fig. 26, SMF #1 determines to switch the data path passing through UPF #2 to the NW 1090.

In Step ST1810 illustrated in Fig. 26, SMF #1 requests release of a PDU session, from SMF #2. The request may include information related to the UE, may include information related to the PDU session, may include information related to a QoS flow, may include information related to an NW failure, or may include information related to switching of the NW serving as the path. The information related to the NW failure may include information related to the UPF that is a target of the NW failure. Signaling of Nsmf_PDUSession_Release_Request (see NPL 31) may be used for Step ST1810. SMF #2 may initiate the operation of the PDU session release in response to Step ST1810.

The procedures 1100 and 1111 in Fig. 26 are the same as those in Fig. 12, Fig. 13, and Fig. 14.

Steps ST1656 and ST1657 illustrated in Fig. 26 are the same as those in Fig. 23 and Fig. 24.

In the procedure 1861 illustrated in Fig. 26, processing similar to that of the procedure 1161 illustrated in Fig. 12 and Fig. 16 is performed. In the procedure 1861, PDU session release may be performed instead of the request for PDU session establishment/modification. In the procedure 1861, signaling similar to that in the procedure 1161 may be used. In Step ST1190 of the procedure 1861 corresponding to Step ST1190 of the procedure 1161 illustrated in Fig. 16, a session management policy association termination procedure is performed between SMF #2 and PCF #2. The procedure may be, for example, the procedure disclosed in clause 4.16.6 of NPL 31 (3GPP TS23.502).

In Step ST1891 illustrated in Fig. 26, SMF #2 performs response to the PDU session release request, to SMF #1. Step ST1891 may be performed as a response to Step ST1810.

Steps ST1192 to ST1195 illustrated in Fig. 26 are the same as those in Fig. 12.

Another solution will be disclosed. The switching of the NW serving as the path may be initiated by the non-anchor NW. For example, the anchor NW may initiate the switching in response to detection of a failure of the non-anchor NW or may initiate the switching in response to notification of an NW failure from the anchor NW.

The non-anchor NW may request NW switching, from the anchor NW. The request may be performed, for example, between the non-anchor SMF and the anchor SMF. The request may include information related to a faulty intermediate UPF, may include information related to the UE, may include information related to the PDU session, or may include information related to a QoS flow. The anchor NW may perform UPF configuration in response to the request. The configuration may be, for example, resource reservation for the UPF for communication of the UE. The UPF configuration in the anchor NW may be similar to that described above.

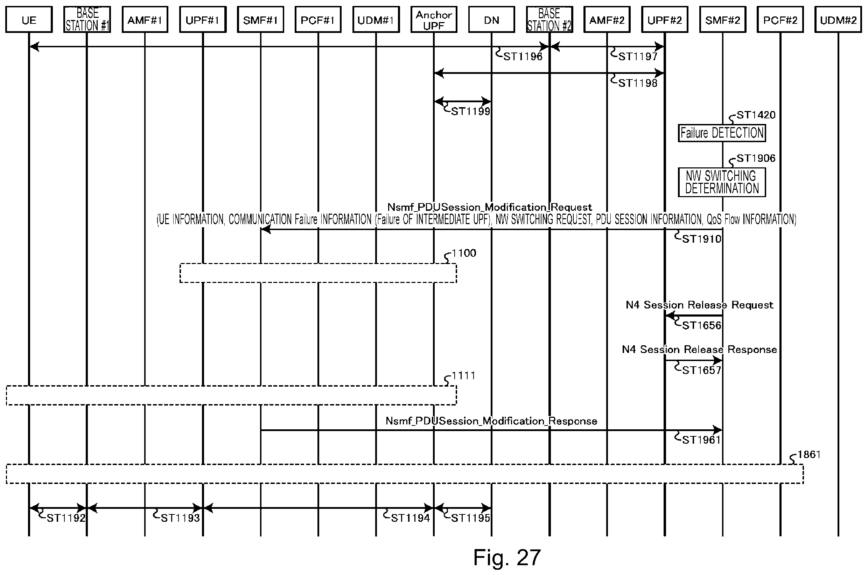

Fig. 27 is a sequence diagram illustrating another example of the NW switching operation in the non-anchor NW. Fig. 27 illustrates an example where the non-anchor NW detects an NW failure and the non-anchor NW determines NW switching. In the example illustrated in Fig. 27, the NW is switched from the NW 1091 to the NW 1090. In the example illustrated in Fig. 27, each process similar to those in Fig. 12, Fig. 17, Fig. 19, Fig. 23, Fig. 24, and Fig. 26 is denoted with the same number, and the common description thereof is omitted.

Steps ST1196 to ST1199 illustrated in Fig. 27 are similar to those in Fig. 12. Step ST1420 illustrated in Fig. 27 is the same as that in Fig. 19.

In Step ST1906 illustrated in Fig. 27, SMF #2 determines switching of an NW serving as a data path. In the example illustrated in Fig. 27, SMF #2 determines to switch the data path passing through UPF #2 to the NW 1901.

In Step ST1910 illustrated in Fig. 27, SMF #2 requests PDU session modification from SMF #1. The request may include information related to the UE, may include information related to the PDU session, may include information related to a QoS flow, may include information related to an NW failure, or may include information related to switching of the NW serving as the path. The information related to the NW failure may include information related to the UPF that is a target of the NW failure. Signaling of
Nsmf_PDUSession_Modification_Request (see NPL 31) may be used for Step ST1910.

In Step ST1910 illustrated in Fig. 27, a request for PDU session establishment may be performed. For example, signaling of Nsmf_PDUSession_Establishment_Request (see NPL 31) may be used.

The procedures 1100 and 1111 in Fig. 27 are the same as those in Fig. 12, Fig. 13, and Fig. 14.

Steps ST1656 and ST1657 illustrated in Fig. 27 are the same as those in Fig. 23 and Fig. 24.

In Step ST1961 illustrated in Fig. 27, SMF #1 performs response to the PDU session establishment request, to SMF #2. Step ST1961 may be performed as a response to Step ST1910.

The procedure 1861 in Fig. 27 is the same as that in Fig. 26. Steps ST1192 to ST1195 are the same as those in Fig. 12.

An NW that detects an NW failure and an NW that initiates NW switching processing may be different from each other. For example, the anchor NW may detect an NW failure, and the non-anchor NW may initiate NW switching processing. The anchor SMF may notify the non-anchor SMF of information related to the NW failure. The notification may include information related to a faulty intermediate UPF, may include information related to a PDU session, or may include information related to a QoS flow. The non-anchor SMF may initiate NW switching processing in response to the notification.

An NW that initiates the NW switching processing may be determined in advance in a standard. For example, an NW that has detected an NW failure may initiate the NW switching processing. This enables, for example, the NW switching processing to be quickly executed. As another example, an NW in which an NW failure has occurred may initiate the NW switching processing.

As another example, the anchor NW may determine an NW that initiates the NW switching processing. For example, the anchor NW may determine an NW that initiates the NW switching processing in response to detection of an NW failure or may determine an NW that initiates the NW switching processing in response to notification of information related to an NW failure from the non-anchor NW.

The anchor NW may notify the non-anchor NW of information related to an NW that initiates the NW switching processing. As another example, which NW initiates the NW switching processing may be judged based on information included in transmission signaling from the anchor SMF to the non-anchor SMF. For example, the anchor NW may initiate the NW switching processing when an NW switching request is included, or the non-anchor NW may initiate the NW switching processing when information related to an NW failure is included. This enables, for example, the size of signaling from the anchor NW to the non-anchor NW to be reduced.

As another example, the UE may determine an NW that initiates the NW switching processing. The UE may notify the anchor AMF of information related to an NW that initiates the switching processing. The information may be, for example, preference information from the UE. The anchor AMF may notify the anchor SMF of the information. This enables, for example, the UE to select an NW with low latency with the UE, and consequently enables the NW switching processing to be promptly executed.

A priority order may be provided between the intermediate UPF switching disclosed in embodiment 2 and the NW switching disclosed in this embodiment 3.

For example, the intermediate UPF switching may be preferentially performed. This enables, for example, an increase in the load of the other NW to be prevented.

As another example, the NW switching may be preferentially performed. This enables, for example, traffic distribution between NWs.

As another example, the UE may determine which switching processing is prioritized. The UE may notify the anchor AMF of information related to which switching processing is prioritized. The information may be, for example, preference information from the UE. The anchor AMF may notify the anchor SMF of the information. This enables, for example, a method with a smaller processing amount for the UE to be executed, and consequently the power consumption of the UE to be reduced.

As another example, which switching processing is prioritized may be determined by the anchor NW, may be determined by an NW that has detected a failure, or may be determined by an NW in which a failure has occurred.

The determination of which switching process is performed may be performed each time. The determination may be performed by the anchor NW apparatus, for example, the anchor SMF, or may be performed by the non-anchor NW apparatus, for example, the non-anchor SMF. For example, the anchor SMF may perform the determination by using information related to QoS and/or QoE of the non-anchor NW, may perform the determination by using information related to QoS and/or QoE of the NW itself, or may perform the determination by using both of the above-described pieces of information. As another example, the non-anchor SMF may perform the determination by using information related to QoS and/or QoE of the anchor NW, may perform the determination by using information related to QoS and/or QoE of the NW itself, or may perform the determination by using both of the above-described pieces of information.

The information related to QoS and/or QoE may include, for example, information related to QoS and/or QoE supportable in the NW, information related to a measurement result of QoS and/or QoE, or information related to QoS and/or QoE required for a service.

The non-anchor NW may notify the anchor NW of information related to the QoS and/or QoE of the NW itself. The anchor NW may request information related to QoS and/or QoE from the non-anchor NW. The notification from the non-anchor NW to the anchor NW may be performed in response to the request from the anchor NW to the non-anchor NW.

As another example, the anchor NW may notify the non-anchor NW of information related to QoS and/or QoE of the NW itself. The non-anchor NW may request information related to QoS and/or QoE from the anchor NW. The notification from the anchor NW to the non-anchor NW may be performed in response to the request from the non-anchor NW to the anchor NW.

In the NW switching disclosed in this embodiment 3, PDU session modification of the anchor NW may be performed, or PDU session establishment may be performed.

The method disclosed in this embodiment 3 may be used in a case where a PDU session is established in the anchor NW or may be used in a case where no PDU session is established in the anchor NW. For example, PDU session modification in the NW switching processing may be performed in a case where a PDU session is established in the anchor NW. As another example, the PDU session establishment in the NW switching processing may be performed in a case where no PDU session is established in the anchor NW.

According to this embodiment 3, it is possible to recover from an NW failure and to distribute the load of the NW.

### Alteration 1 of Embodiment 3.

In this alteration 1, another example related to NW switching will be disclosed.

An NW serving as a data path may be switched from the anchor NW to the non-anchor NW. For example, in data transmission and reception via the non-anchor NW, the path of the data transmission and reception may be switched to the non-anchor NW in response to detection of a failure of an intermediate UPF of the anchor NW.

The switching of the NW serving as the path may be initiated by the anchor NW. For example, the anchor NW may initiate the switching in response to detection of a failure of the NW itself. For example, the anchor SMF may initiate the switching.

The anchor NW may initiate the switching by using information related to QoS and/or QoE of the non-anchor NW, may initiate the switching by using the information related to QoS and/or QoE of the NW itself, or may initiate the switching by using both of the above-described pieces of information.

The information related to QoS and/or QoE may include, for example, information related to QoS and/or QoE supportable in the NW, information related to a measurement result of QoS and/or QoE, or information related to QoS and/or QoE required for a service.

The non-anchor NW may notify the anchor NW of information related to the QoS and/or QoE of the NW itself. The anchor NW may request information related to QoS and/or QoE from the non-anchor NW. The notification from the non-anchor NW to the anchor NW may be performed in response to the request from the anchor NW to the non-anchor NW.

PDU session release may be performed, or PDU session modification may be performed, in the anchor NW. PDU session establishment may be performed, or PDU session modification may be performed, in the non-anchor NW.

The anchor SMF may notify the non-anchor NW of information related to NW switching. The notification may be made, for example, to the non-anchor SMF. The notification may be performed, for example, as a request for PDU session establishment or as a request for PDU session modification. For the notification and/or the request, for example, the signaling of Nsmf_PDUSession_Establishment_Request (see NPL 31) may be used, or the signaling of Nsmf_PDUSession_Modification_Request (see NPL 31) may be used. The notification and/or the request may include information related to the NW failure, may include information related to the faulty intermediate UPF, may include information related to the UE, may include information related to a PDU session, or may include information related to a QoS flow.

The anchor NW may release the resource of the faulty intermediate UPF. For example, the anchor SMF may request connection release from the faulty intermediate UPF.

The non-anchor NW may determine a post-switching intermediate UPF or may initiate connection with the post-switching intermediate UPF.

The non-anchor NW may notify the anchor NW of information related to the post-switching intermediate UPF. The anchor SMF may indicate the anchor UPF to initiate connection with the post-switching intermediate UPF.

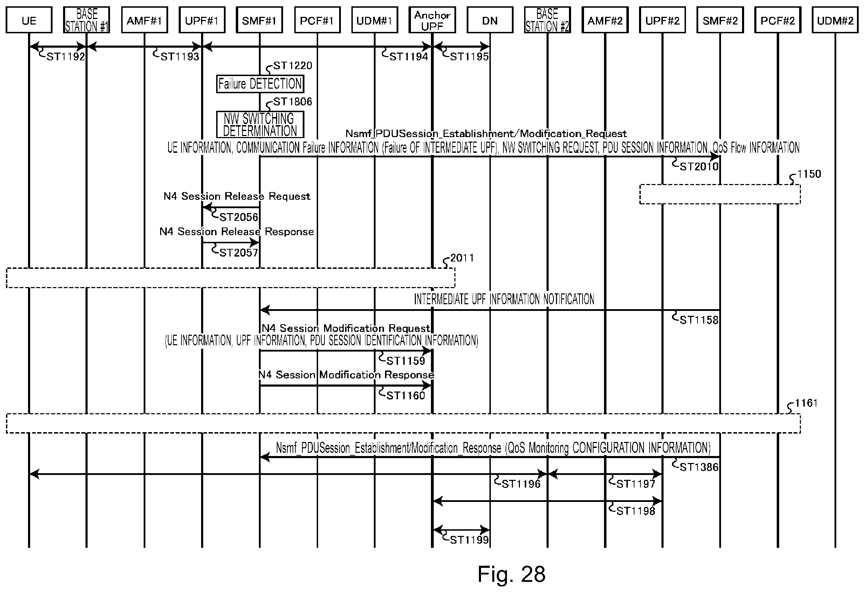

Fig. 28 is a sequence diagram illustrating an example of NW switching operation in the anchor NW. Fig. 28 illustrates an example where the anchor NW detects an NW failure and the anchor NW determines NW switching. In the example illustrated in Fig. 28, the NW is switched from the NW 1090 to the NW 1091. In the example illustrated in Fig. 28, each process similar to those in Fig. 12, Fig. 17, Fig. 18, Fig. 23, and Fig. 26 is denoted with the same number, and the common description thereof is omitted.

Steps ST1192 to ST1195 illustrated in Fig. 28 are the same as those in Fig. 12. Step ST1220 is the same as that in Fig. 17. Step ST1806 is the same as that in Fig. 26. In Step ST1806 illustrated in Fig. 28, SMF #1 determines to switch the data path passing through UPF #1, to the NW 1091.

In Step ST2010 illustrated in Fig. 28, SMF #1 requests PDU session establishment from SMF #2. PDU session modification may be requested. The request may include information related to the UE, may include information related to the PDU session, may include information related to a QoS flow, may include information related to an NW failure, or may include information related to switching of the NW serving as the path. The information related to the NW failure may include information related to the UPF that is a target of the NW failure. For Step ST2010, signaling of Nsmf_PDUSession_Establish_Request (see NPL 31) may be used, or signaling of Nsmf_PDUSession_Modification_Request (see NPL 31) may be used.

The procedure 1150 illustrated in Fig. 28 is the same as those in Fig. 12 and Fig. 15.

In Steps ST2056 and ST2057 illustrated in Fig. 28, processes similar to those in Steps ST1656 and ST1657 of the procedure 1625 illustrated in Fig. 23 and Fig. 24, respectively, are performed between SMF #1 and UPF #1.

In the procedure 2011 illustrated in Fig. 28, processing similar to that of the procedure 1111 illustrated in Fig. 12 and Fig. 14 is performed. In the procedure 2011, PDU session release may be performed instead of the request for PDU session establishment/modification. In the procedure 2011, signaling similar to that in the procedure 1161 may be used. In Step ST1140 of the procedure 2011 corresponding to Step ST1140 of the procedure 1111 illustrated in Fig. 14, a session management policy association termination procedure is performed between SMF #1 and PCF #1. The procedure may be, for example, the procedure disclosed in clause 4.16.6 of NPL 31 (3GPP TS23.502).

Steps ST1158 to ST1160 illustrated in Fig. 28 are the same as those in Fig. 12. The procedure 1161 is the same as those in Fig. 12 and Fig. 16. Step ST1386 is the same as that in Fig. 18. Steps 1196 to ST1199 are the same as those in Fig. 12.

A priority order may be provided between the intermediate UPF switching in the anchor NW and the NW switching disclosed in this alteration 1.

For example, the intermediate UPF switching may be preferentially performed. This enables, for example, an increase in the load of the non-anchor NW to be prevented.

As another example, the NW switching may be preferentially performed. This enables, for example, traffic distribution between NWs.

As another example, the UE may determine which switching processing is prioritized. The UE may notify the anchor AMF of information related to which switching processing is prioritized. The information may be, for example, preference information from the UE. The anchor AMF may notify the anchor SMF of the information. This enables, for example, a method with a smaller processing amount for the UE to be executed, and consequently the power consumption of the UE to be reduced.

As another example, the anchor NW may determine which switching processing is prioritized. For example, the anchor SMF may determine or the anchor PCF may determine which switching processing to be prioritized.

The determination of which switching process is performed may be performed each time. The determination may be performed by the anchor NW apparatus, for example, the anchor SMF. For example, the anchor SMF may perform the determination by using information related to QoS and/or QoE of the non-anchor NW, may perform the determination by using information related to QoS and/or QoE of the NW itself, or may perform the determination by using both of the above-described pieces of information.

The information related to QoS and/or QoE may include, for example, information related to QoS and/or QoE supportable in the NW, information related to a measurement result of QoS and/or QoE, or information related to QoS and/or QoE required for a service.

The non-anchor NW may notify the anchor NW of information related to the QoS and/or QoE of the NW itself. The anchor NW may request information related to QoS and/or QoE from the non-anchor NW. The notification from the non-anchor NW to the anchor NW may be performed in response to the request from the anchor NW to the non-anchor NW.

In the NW switching disclosed in this alteration 1, PDU session modification of the non-anchor NW may be performed, or PDU session establishment may be performed.

The method disclosed in this alteration 1 may be used in a case where a PDU session is established in the non-anchor NW or may be used in a case where no PDU session is established in the non-anchor NW. For example, PDU session modification in the NW switching processing may be performed in a case where a PDU session is established in the non-anchor NW. As another example, the PDU session establishment in the NW switching processing may be performed in a case where no PDU session is established in the non-anchor NW.

According to this alteration 1, it is possible to recover from an NW failure and to distribute the load of the NW.

### Embodiment 4.

Embodiment 4 discloses another example of the method of recovering from an NW failure.

The anchor UPF may be switched. For example, the switching may be performed in response to detection of a failure in the anchor UPF. The anchor SMF may perform the detection.

The anchor SMF may determine a new anchor UPF (which may be hereinafter referred to as a post-switching anchor UPF). The anchor SMF may establish a connection with the post-switching anchor UPF.

The anchor SMF may request connection establishment from the post-switching anchor UPF. For example, signaling of an N4 session establishment request (see NPL 31) may be used for the request. The request may include information related to the UE, may include information related to a PDU session, may include information related to a QoS flow, may include information related to the QoS monitoring disclosed in embodiment 1, or may include information related to the intermediate UPF. For example, the information related to the intermediate UPF being included enables connection between the post-switching anchor UPF and the intermediate UPF to be quickly established.

The post-switching anchor UPF may respond to the anchor SMF for the connection establishment. For the response, for example, signaling of an N4 session establishment response (see NPL 31) may be used. The anchor SMF may grasp connection completion of the post-switching anchor UPF in response to the response.

The anchor SMF may request connection release, from the anchor UPF in which a failure is detected (which may be hereinafter referred to as a faulty anchor UPF). For the request, for example, signaling of an N4 session release request (see NPL 31) may be used. The request may include information related to the UE, may include information related to a PDU session to be released, or may include information related to a QoS flow to be released. The faulty anchor UPF may release a resource related to the PDU session and/or the QoS flow by using the information.

The faulty anchor UPF may respond to the request for connection release, to the anchor SMF. For the response, for example, signaling of an N4 session release response (see NPL 31) may be used. The anchor SMF may grasp the completion of the release of the faulty anchor UPF in response to the response.

The anchor SMF may request connection modification from the intermediate UPF. For example, the signaling of an N4 session modification request (see NPL 31) may be used. The request may include information related to the UE, may include information related to a PDU session, may include information related to a QoS flow, may include information related to the QoS monitoring disclosed in embodiment 1, or may include information related to the post-switching anchor UPF. The intermediate UPF may initiate connection with the post-switching anchor UPF or terminate connection with the faulty anchor UPF, by using the information. As another example, the intermediate UPF may modify the anchor UPF to be a connection destination, by using the information.

The anchor SMF may notify the non-anchor SMF of the switching of the UPF. Request for UPF switching may be performed. For example, the signaling of Nsmf_PDUSession_Modification_Request (see NPL 31) may be used for the notification and/or the request. The notification and/or the request may include information related to the post-switching anchor UPF. This enables, for example, the non-anchor SMF to promptly grasp that the anchor UPF has been switched.

The non-anchor SMF may request switching of a connection destination, from the intermediate UPF. The request may include information related to the post-switching anchor UPF, may include information related to the UE, may include information related to a PDU session, may include information related to a QoS flow, or may include information related to the QoS monitoring configuration disclosed in embodiment 1. For example, the signaling of an N4 session modification request (see NPL 31) may be used for the request. The intermediate UPF may switch the connection with the anchor UPF in response to the request. For example, the intermediate UPF may release an N9 interface (see NPL 10) with the faulty anchor UPF or may establish an N9 interface with the post-switching anchor UPF, in response to the request.

The intermediate UPF may notify the non-anchor SMF of completion of the switching of the connection with the anchor UPF. For example, the signaling of an N4 session modification response (see NPL 31) may be used for the notification. The non-anchor SMF may grasp the completion of the switching of the connection with the intermediate UPF and the post-switching anchor UPF in response to the notification.

The non-anchor NW may notify the UE of the PDU session modification. The notification may be performed by the non-anchor SMF or may be performed via the non-anchor AMF, for example. As another example, the notification may be performed by the non-anchor AMF. The UE may perform the configuration related to the switching of the anchor UPF in response to the notification.

The non-anchor SMF may respond to the request for the UPF switching, to the anchor SMF. For example, the signaling of Nsmf_PDUSession_Modification_Response (see NPL 31) may be used for the response. This enables, for example, the anchor SMF to quickly grasp the completion of the connection between the intermediate UPF of the non-anchor NW and the post-switching anchor UPF.

The anchor UPF switching may be notified from the anchor NW to the non-anchor NW in a case where no PDU session is established in the non-anchor NW. The non-anchor NW apparatus may retain information related to the anchor UPF switching. The retention may be performed, for example, by the non-anchor SMF. The information may be used for, for example, PDU session establishment in the non-anchor NW. This enables, for example, PDU session establishment in the non-anchor NW to be performed promptly.

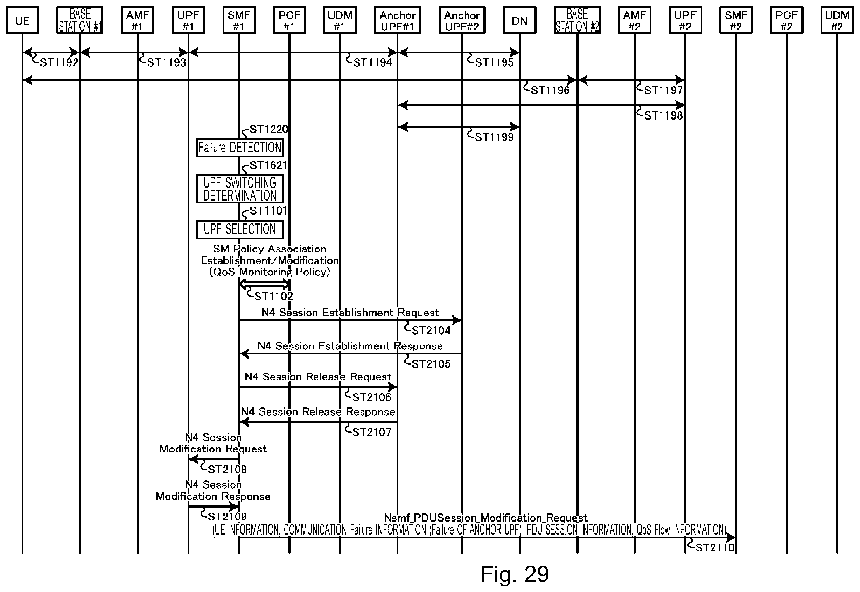

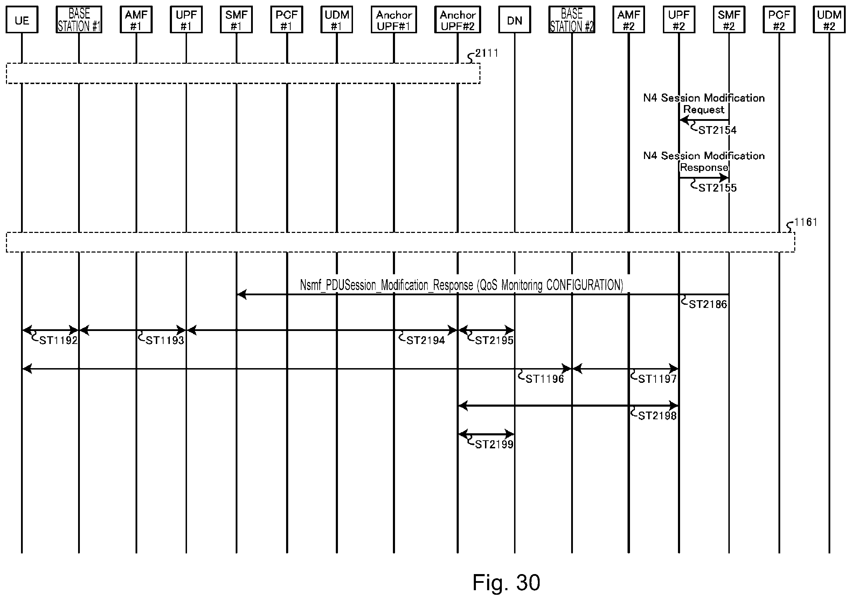

Fig. 29 and Fig. 30 are sequence diagrams illustrating an example of anchor UPF switching operation. Fig. 29 illustrates the first half of the sequence, and Fig. 30 illustrates the second half of the sequence. Fig. 29 and Fig. 30 illustrate one series of operations (anchor UPF switching operation). In the example illustrated in Fig. 29 and Fig. 30, anchor UPF #1 is switched to anchor UPF #2 in the same NW. The example illustrated in Fig. 29 and Fig. 30 illustrates an example where the anchor NW detects an NW failure and the anchor NW determines anchor UPF switching. In the example illustrated in Fig. 29 and Fig. 30, each process similar to those in Fig. 12, Fig. 17, and Fig. 23 is denoted with the same number, and the common description thereof is omitted.

Steps ST1192 to ST1199 illustrated in Fig. 29 are the same as those in Fig. 12. Step ST1220 is the same as that in Fig. 17. In Step S1220 illustrated in Fig. 29, SMF #1 detects a failure of anchor UPF #1. Step ST1621 is the same as that in Fig. 23. In Step ST1621 illustrated in Fig. 29, SMF #1 determines anchor UPF switching. Step ST1101 is the same as those in Fig. 12 and Fig. 13. In Step ST1101 illustrated in Fig. 29, SMF #1 selects anchor UPF #2. Step ST1102 is the same as those in Fig. 12 and Fig. 13.

In Step ST2104 illustrated in Fig. 29, SMF #1 requests N4 session establishment from anchor UPF #2. In response to Step ST2104, anchor UPF #2 performs N4 session establishment. In Step ST2105, anchor UPF #2 performs response to Step ST2104 to SMF #1.

In Step ST2106 illustrated in Fig. 29, SMF #1 requests N4 session release from anchor UPF #1. In response to Step ST2106, anchor UPF #1 performs N4 session release. In Step ST2107, anchor UPF #1 performs response to Step ST2106 to SMF #1.

In Step ST2108 illustrated in Fig. 29, SMF #1 requests N4 session modification from UPF #1. The request may include information related to modification of a connection destination UPF. The request may include information related to anchor UPF #2. UPF #1 may switch the connection destination UPF in response to Step ST2108. In Step ST2109, UPF #1 performs response to Step ST2108 to SMF #1.

In Step ST2110 illustrated in Fig. 29, SMF #1 requests PDU session modification from SMF #2. The request may include information related to the UE, may include information related to the PDU session, may include information related to a QoS flow, may include information related to the NW failure, may include information related to the UPF switching, or may include information related to the post-switching UPF. The information related to the NW failure may include information related to the UPF that is a target of the NW failure. Signaling of Nsmf_PDUSession_Modification_Request (see NPL 31) may be used for Step ST2110.

In the procedure 2111 illustrated in Fig. 30, processing similar to that of the procedure 1111 illustrated in Fig. 12 and Fig. 14 may be performed. In the procedure 2111 illustrated in Fig. 30, the processing of anchor UPF #2 may be performed instead of the processing of the anchor UPF illustrated in Fig. 12 and Fig. 14.

In Steps ST2154 and ST2155 illustrated in Fig. 30, processes similar to those performed in Steps ST2108 and ST2109 illustrated in Fig. 29, respectively, are performed between SMF #2 and UPF #2.

The procedure 1161 illustrated in Fig. 30 is the same as those in Fig. 12 and Fig. 16.

In Step ST2186 illustrated in Fig. 30, SMF #2 performs response to the PDU session modification request, to SMF #1. Step ST2186 may be performed as a response to Step ST2110 illustrated in Fig. 29.

In steps ST1192, ST1193, ST2194, and ST2195 illustrated in Fig. 30, data transmission and reception between the UE and the DN via the NW 1090 are performed. Step ST1192 indicates data transmission and reception between the UE and base station #1. Step ST1193 indicates data transmission and reception between base station #1 and UPF #1. Step ST2194 indicates data transmission and reception between UPF #1 and anchor UPF #2. Step ST2195 indicates data transmission and reception between anchor UPF #2 and the DN.

In Steps ST1196, ST1197, ST2198, and ST2199 illustrated in Fig. 30, data transmission and reception between the UE and the DN via the NW 1091 are performed. Step ST1196 indicates data transmission and reception between the UE and base station #2. Step ST1197 indicates data transmission and reception between base station #2 and UPF #2. Step ST2198 indicates data transmission and reception between UPF #2 and anchor UPF #2. Step ST2199 indicates data transmission and reception between anchor UPF #2 and the DN.

Intermediate UPF switching may be performed. The intermediate UPF switching may be performed in response to anchor UPF switching. The intermediate UPF to be a new post-switching intermediate UPF (post-switching intermediate UPF) may be, for example, an intermediate UPF having a large communication capacity with the post-switching anchor UPF, or may be an intermediate UPF having low latency in communication with the post-switching anchor UPF. The intermediate UPF switching may be performed in the anchor NW or may be performed in the non-anchor NW. The intermediate UPF switching may be performed in a similar method to the method disclosed in embodiment 2, for example. For example, the operation by each apparatus of the non-anchor NW in embodiment 2 may be performed in each apparatus of the anchor NW. This enables, for example, communication efficiency in the communication system to be improved.

Another solution will be disclosed. The UPF of another NW may be the anchor UPF. The anchor AMF need not be switched, the anchor SMF need not be switched, or the anchor PCF need not be switched. This enables, for example, flexibility in data transmission in the communication system to be improved.

As another solution, the anchor NW and the non-anchor NW may be switched. This enables, for example, complexity in the communication system to be prevented.

The switching may be determined by the anchor SMF. The anchor SMF may request the switching from the non-anchor SMF. The non-anchor SMF may respond to the request, to the anchor SMF. The anchor SMF may notify the anchor AMF of the switching of the anchor NW. The anchor AMF may perform processing in switching from the anchor NW to the non-anchor NW in response to the notification. The processing may be, for example, PDU session modification. The processing may be performed between the anchor base station and the UE. The non-anchor SMF may notify the non-anchor AMF of the switching of the non-anchor NW. The non-anchor AMF may perform processing in switching from the non-anchor NW to the anchor NW in response to the notification. The processing may be, for example, PDU session modification. The processing may be performed between the non-anchor base station and the UE.

The request for the switching from the anchor SMF to the non-anchor SMF may include information related to the DN or may include information related to the UE. The information related to the DN may include information related to an address of the DN. The information related to the address may include an IP address or information related to a full qualified domain name (FQDN). The information related to the UE may include an address (for example, an IP address) of the UE, may include an identifier of the UE, or may include information related to slicing of the UE.

The non-anchor SMF may notify the post-switching anchor UPF of the information related to the DN and/or the information related to the UE. This enables, for example, the post-switching anchor UPF to promptly execute connection with the DN.

In the anchor UPF switching disclosed in this embodiment 4, PDU session modification may be performed, or PDU session establishment may be performed, in the post-switching anchor UPF.

The anchor UPF modification disclosed in this embodiment 4 may be performed in a case where a PDU session is established in the anchor UPF or may be performed in a case where a PDU session is not established in the anchor UPF. For example, PDU session modification of the anchor UPF may be performed in a case where a PDU session is established in the anchor UPF. As another example, PDU session establishment of the anchor UPF may be performed in a case where no PDU session is established in the anchor UPF.

According to this embodiment 4, it is possible to recover from a failure of the anchor UPF, and consequently to improve the availability of data communication in the communication NW.

The NW apparatus in the present disclosure may be an NF of the NW. The anchor NW apparatus may be, for example, the NF of the anchor NW. The non-anchor NW apparatus may be the NF of the anchor NW. This enables, for example, the method described in the present disclosure to be applicable even when a plurality of NFs of an NW are accommodated in the same apparatus.

The methods described in the present disclosure may be used in situations other than an NW failure. For example, the methods may be used when the QoS is deteriorated. The NW failure detection described in the present disclosure may be QoS deterioration detection. This enables, for example, the UPF switching and/or NW switching operation to be executed before communication is disconnected, and consequently the availability of a communication NW to be improved.

As another example, the methods disclosed in this disclosure may be used in a certain situation. The certain situation may be, for example, an increase in the load of the UPF or an increase in the load of the AMF. This enables, for example, a further increase in the load of the UPF and/or the AMF to be prevented, and consequently a failure of the NW to be prevented.

In the present disclosure, signaling between different NWs may be performed via the SEPP (see NPL 10). This enables, for example, security in the signaling to be ensured.

In the present disclosure, for user data transfer between different NWs, Inter PLMN User Plane Security (IPUPS) function (see NPL 10) may be used. This enables, for example, security in the user data transfer to be ensured.

Transmission and reception between a base station and a CN node (except AMF) may be performed via an AMF. As another method, transmission and reception between the base station and the CN node (except AMF) may be performed via no AMF. No AMF is passed through and thus the signaling amount can be reduced, allowing a load of the AMF to be reduced.

In the present disclosure, the node may be a function.

In the communication system according to the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

### Reference Signs List

- 202: Communication terminal apparatus (mobile terminal),
- 210: Communication system,
- 213, 240-1, 240-2, 750: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell.

## Claims

1. A communication system supporting a fifth generation radio access system, the communication system comprising
a plurality of networks including a radio access network and a core network, wherein
the plurality of networks include
an anchor network being one of the plurality of networks to which a communication terminal is connected and has a user plane function of being directly connected to a data network of a data transmission and reception destination of the communication terminal, and
a non-anchor network connected to the data network via the anchor network, and
the anchor network is configured to
acquire information related to communication quality in the non-anchor network from the non-anchor network,
perform failure detection of the non-anchor network, based on the information acquired, and
perform failure detection of the anchor network, based on information related to communication quality in the anchor network.

2. A communication system supporting a fifth generation radio access system, the communication system comprising:
a plurality of networks including a radio access network and a core network, wherein
the plurality of networks include
an anchor network being one of the plurality of networks to which a communication terminal is connected and has a user plane function of being directly connected to a data network of a data transmission and reception destination of the communication terminal, and
a non-anchor network connected to the data network via the anchor network, and
the non-anchor network is configured to
acquire information related to communication quality in the anchor network from the anchor network,
perform failure detection of the anchor network, based on the information acquired, and
perform failure detection of the non-anchor network, based on information related to communication quality in the non-anchor network.

3. The communication system according to claim 1, wherein the anchor network is configured to request, when detecting a failure of the non-anchor network, the non-anchor network to switch a data transmission path in the non-anchor network, and switch, when detecting a failure of the anchor network, a data transmission path in the anchor network.

4. The communication system according to claim 1 or 3, wherein the anchor network is configured to switch, when detecting a failure of a network apparatus directly connected to the data network to transmit and receive data among network apparatuses constituting the anchor network, the network apparatus directly connected to the data network to transmit and receive data.

5. The communication system according to claim 1, wherein the anchor network is configured to request, when detecting a failure of the non-anchor network, the non-anchor network to switch a transmission path for data transmission and reception via the non-anchor network to a transmission path via the anchor network, and switch, when detecting a failure of the anchor network, the transmission path for data transmission and reception via the anchor network to the transmission path via the non-anchor network.

6. The communication system according to claim 2, wherein the non-anchor network is configured to request, when detecting a failure of the anchor network, the anchor network to switch a data transmission path in the anchor network, and switch, when detecting a failure of the non-anchor network, a data transmission path in the non-anchor network.

7. The communication system according to claim 2 or 6, wherein the non-anchor network is configured to request, when detecting a failure of a network apparatus directly connected to the data network to transmit and receive data among network apparatuses constituting the anchor network, the anchor network to switch the network apparatus directly connected to the data network to transmit and receive data.

8. The communication system according to claim 2, wherein the non-anchor network is configured to request, when detecting a failure of the anchor network, the anchor network to switch a transmission path for data transmission and reception via the anchor network to a transmission path via the non-anchor network, and switch, when detecting a failure of the non-anchor network, the transmission path for data transmission and reception via the non-anchor network to the transmission path via the anchor network.
